# EUROPEAN PATENT SPECIFICATION

(11) **EP 4 187 362 B1**
(45) Date of publication and mention of the grant of the patent: **24.12.2025**
(21) Application number: 22836637.3
(22) Date of filing: 25.05.2022
(51) Int. Cl.: G06F 1/16, G06F 3/0487, G06F 3/01, G06F 21/44

(54) **METHOD FOR WEARABLE DEVICE TO CONTROL ELECTRONIC DEVICE, AND COMMUNICATION SYSTEM**
VERFAHREN FÜR EINE TRAGBARE VORRICHTUNG ZUR STEUERUNG EINER ELEKTRONISCHEN VORRICHTUNG UND KOMMUNIKATIONSSYSTEM
PROCÉDÉ POUR DISPOSITIF À PORTER SUR SOI POUR COMMANDER UN DISPOSITIF ÉLECTRONIQUE, ET SYSTÈME DE COMMUNICATION

(30) Priority: 08.07.2021 CN 202110774696
(43) Date of publication of application: 31.05.2023
(73) Proprietor: Honor Device Co., Ltd., Shenzhen, Guangdong 518040 (CN)
(72) Inventor: FU, Yingke, Shenzhen, Guangdong 518040 (CN)
(74) Representative: Epping - Hermann - Fischer
(86) International application number: PCT/CN2022/095053
(87) International publication number: WO 2023/279882

(56) References cited:
- EP-A1- 3 001 637
- CN-A- 104 121 663
- CN-A- 105 700 680
- CN-A- 107 241 647
- CN-A- 108 900 698
- CN-A- 108 900 698
- CN-A- 113 655 945
- US-A1- 2015 061 842
- US-A1- 2019 295 429
- US-A1- 2020 344 213

## Description

This application claims priority to Chinese Patent Application No. 202110774696.3, filed with the China National Intellectual Property Administration on July 8, 2021 and entitled "METHOD FOR CONTROLLING ELECTRONIC DEVICE BY WEARABLE DEVICE AND COMMUNICATION SYSTEM".

### TECHNICAL FIELD

This application relates to the field of terminals, and in particular, to a method for controlling an electronic device by a wearable device and a communication system.

### BACKGROUND

With the development of science and technology, more and more electronic devices with different functions appear in the modern society, such as a mobile phone, a computer, a smart television, and a smart refrigerator. In a process of actually using these electronic devices, a scenario in which the electronic device needs to be controlled in a short distance often exists. For example, during a meeting, a host of the meeting may use a laser pen to remotely control a computer to turn pages of a PPT. For another example, in the field of smart home, a user may control a smart home device by using a mobile phone connected to the smart home device.

However, when the PPT is remotely controlled by using the laser pen, the user needs to always hold the laser pen, which prevents the user from giving a gesture explanation. In addition, when the mobile phone is used to control the smart home device, the user needs to open, on the mobile phone, an application (application, APP) corresponding to the smart home device. Operations are relatively cumbersome.

It can be learned that an existing manner of performing proximity control on an electronic device is cumbersome and inconvenient.

CN 108 900 698 A relates to a method for controlling a terminal. According to the method, a wearable device obtains movement information of the device during the moving process and sends the movement information to a corresponding terminal connected with the wearable device; and after receiving the movement information, the terminal controls an indication cursor displayed on a display interface of the terminal to move based on the movement information.

US 2015/0061842 A1 relates to a method of controlling a mobile terminal of a watch type wearable on a user's wrist, comprising the steps of: sensing a motion of the mobile terminal and a variation according to a muscle movement of a part having the mobile terminal worn thereon; and remotely controlling either the mobile terminal and the external device based on a sensing signal.

### SUMMARY

This application provides a method for controlling an electronic device by a wearable device and a communication system, so as to identify various action tracks of a user when a wearable device is worn, and correspondingly control an electronic device based on the action tracks. The invention is set out in the appended claims.

To achieve the foregoing objective, the following technical solutions are used in this application: According to a first aspect, this application provides a method for controlling an electronic device by a wearable device, where the method is applied to a communication system including a wearable device and an electronic device, and the wearable device maintains a worn state, and the method includes: the wearable device establishes a binding relationship with the electronic device, where the binding relationship is used to indicate that the wearable device and the electronic device are bound by using a preset account name and a preset password; in response to an operation performed by a user to drive motion of the wearable device, the wearable device generates motion data that matches a motion track of the wearable device; the wearable device determines a control instruction corresponding to the motion data, and sends the control instruction to the electronic device; in response to receiving the control instruction, the electronic device switches from a first interface to a second interface, where the second interface is an interface displayed after the electronic device performs an operation corresponding to the control instruction on a first operation target, and the first operation target includes any one of a presentation document, a video file, an audio file, and a document.

Based on the method provided in this embodiment of this application, the user may perform a preset action in a case in which the wearable device is worn. The wearable device may identify its own motion track and generate motion data that matches the motion track, so as to generate and send a control instruction based on the motion data and control the electronic device. Therefore, the user may perform different actions in a case in which the wearable device is worn, so as to implement control over different functions of the electronic device. This is simple and convenient, and user experience can be improved.

The method further includes: in response to determining that a wearing status of the wearable device changes from the worn state to a detached state, the wearable device re-establishes a binding relationship with the electronic device.

Based on the method provided in this embodiment of this application, after the wearable device is detached, the user may be re-authenticated and a binding relationship is established. In this way, it can be ensured that the user has permission to control the electronic device, so as to effectively avoid a case in which an unrelated user controls the electronic device by using the wearable device, thereby ensuring security of the electronic device.

In an optional implementation, that the wearable device establishes a binding relationship with the electronic device includes: the electronic device displays a first prompt box, where the first prompt box is used to prompt the user to establish a binding relationship between the wearable device and the electronic device, and the first prompt box includes a first option; in response to an operation performed by the user on the first option, the electronic device displays a second prompt box, where the second prompt box is used to remind the user to wear the wearable device, and the second prompt box includes a second option; in response to wearing the wearable device by the user, the wearable device sends wearing status information to the electronic device, where the wearing status information is used to indicate that the wearable device is in a worn state; in response to an operation performed by the user on the second option and receiving the wearing status information, the electronic device displays a password input prompt box, where the password input prompt box includes a preset account name; and in response to an operation of the user entering a preset password in the password input prompt box, the electronic device establishes a binding relationship with the wearable device.

Based on the method provided in this embodiment of this application, the wearable device may establish a binding relationship with the electronic device when the wearable device is in a worn state, so as to implement authentication on a wearer of the wearable device.

In an optional implementation, the operation corresponding to the control instruction includes any one of page forward, page backward, maximization, minimization, volume increase, and volume reduction.

Based on the method provided in this embodiment of this application, the user may use the wearable device to perform various types of control on an interface on the electronic device. For example, when increasing volume or decreasing volume, the electronic device may display a change of a volume value on the interface, thereby implementing interface switching. The whole process is simple and convenient. The user does not need to perform operation on the electronic device, so that the user can perform operation and explanation during a meeting or multimedia teaching.

According to a second aspect, this application further provides a method for controlling an electronic device by a wearable device, where the method is applied to a communication system including a wearable device and an electronic device, the wearable device and the electronic device are connected to a same local area network, and the method includes: the wearable device establishes a communication connection to the electronic device; in response to an operation performed by a user to drive motion of the wearable device, the wearable device generates motion data that matches a motion track of the wearable device; the wearable device determines a control instruction corresponding to the motion data, and sends the control instruction to the electronic device; and in response to receiving the control instruction, the electronic device switches from a first state to a second state, where the second state is a state in which the electronic device is in after the electronic device performs an operation corresponding to the control instruction, and the operation corresponding to the control instruction includes any one of power-on, power-off, volume increase, volume reduction, forward channel switching, backward channel switching, increasing temperature, and decreasing temperature.

Based on the method provided in this embodiment of this application, the wearable device may further control an electronic device (for example, a smart television or a smart refrigerator) that belongs to a same local area network. Further, the user may perform different actions in a case in which the wearable device is worn, so as to control different functions of the electronic device. This is simple and convenient, and user experience can be improved.

In an optional implementation, if the wearable device communicatively connected to at least two electronic devices, the method further includes: the wearable device determines distances from the at least two electronic devices; the wearable device determines an electronic device with the shortest distance as a to-be-controlled device; the wearable device sends a control instruction to the to-be-controlled device; and in response to receiving the control instruction, the to-be-controlled device performs an operation corresponding to the control instruction.

Based on the method provided in this embodiment of this application, if the wearable device is communicatively connected to at least two electronic devices, the wearable device may use an electronic device with the shortest distance from the wearable device as a to-be-controlled device, and control the to-be-controlled device by using different actions.

In an optional implementation, the method further includes: in response to determining the to-be-controlled device, the wearable device displays prompt information, where the prompt information is used to prompt the user to control the to-be-controlled device by using the wearable device.

Based on the method provided in this embodiment of this application, after determining the to-be-controlled device, the wearable device may display prompt information to notify the user of a device that can be controlled.

According to a third aspect, this application further provides a communication system, including a wearable device and an electronic device, where the wearable device performs the method according to any one of the first aspect or the second aspect, and the electronic device performs the method according to any one of the first aspect or the second aspect.

According to a fourth aspect, this application further provides a computer-readable storage medium, including a computer instruction. When the computer instruction runs on a wearable device, the wearable device performs the method according to any one of the first aspect or the second aspect; or when the computer instruction runs on an electronic device, the electronic device performs the method according to any one of the first aspect or the second aspect.

According to a fifth aspect, an embodiment of this application provides a chip system, where the chip system includes one or more interface circuits and one or more processors. The interface circuit and the processor may be interconnected through a line. The chip system may be applied to an electronic device that includes a communication module and a memory. The interface circuit may read an instruction stored in a memory of a wearable device, and send the instruction to the processor. When the instruction is executed by the processor, the wearable device may be enabled to perform the method according to any one of the first aspect or the second aspect. The interface circuit may further read an instruction stored in the memory of the electronic device, and send the instruction to the processor. When the instruction is executed by the processor, the electronic device may be enabled to perform the method according to any one of the first aspect or the second aspect.

It may be understood that the foregoing provided communication system according to the third aspect, the computer-readable storage medium according to the fourth aspect, and the chip system according to the fifth aspect are all used to perform the foregoing corresponding method. Therefore, for beneficial effects that can be achieved, reference may be made to beneficial effects in the foregoing provided corresponding method, and details are not described herein again.

### BRIEF DESCRIPTION OF DRAWINGS

FIG. 1 is a schematic diagram of an architecture of a communication system according to an embodiment of this application;
FIG. 2 is a schematic structural diagram of a terminal device according to an embodiment of this application;
FIG. 3 is a schematic structural diagram of a wearable device according to an embodiment of this application;
FIG. 4 is a schematic diagram of a scenario;
FIG. 5A is a schematic diagram of an interface of a personal computer 401;
FIG. 5B is a schematic diagram of an interface of a personal computer 401;
FIG. 6A is a schematic diagram of an interface of a personal computer 401;
FIG. 6B is a schematic diagram of an interface of a personal computer 401;
FIG. 6C is a schematic diagram of an interface of a personal computer 401;
FIG. 7A is a schematic diagram of an interface of a personal computer 401;
FIG. 7B is a schematic diagram of an interface of a personal computer 401;
FIG. 8 is a schematic diagram of an interface of a personal computer 401;
FIG. 9 is a schematic diagram of an application scenario;
FIG. 10 is a schematic diagram of an application scenario;
FIG. 11A(a) to FIG. 11A(c) are a schematic diagram of an application scenario;
FIG. 11B(a) to FIG. 11B(c) are a schematic diagram of an application scenario;
FIG. 12 is a flowchart of a method for controlling an electronic device by a wearable device;
FIG. 13 is a schematic diagram of another scenario;
FIG. 14(a) to FIG. 14(c) are a schematic diagram of interfaces of a mobile phone;
FIG. 15(a) to FIG. 15(c) are a schematic diagram of interfaces of a mobile phone;
FIG. 16(a) and FIG. 16(b) are a schematic diagram of interfaces of a mobile phone;
FIG. 17A is a schematic diagram of a relative position between a home device and a smart band;
FIG. 17B is a schematic diagram of an interface of a smart band 402;
FIG. 18A is a schematic diagram of an application scenario;
FIG. 18B is a schematic diagram of an application scenario;
FIG. 19A is a schematic diagram of an application scenario;
FIG. 19B is a schematic diagram of an application scenario;
FIG. 20 is a schematic diagram of a relative position of another home device and a smart band;
FIG. 21A is a schematic diagram of an application scenario;
FIG. 21B is a schematic diagram of an application scenario;
FIG. 22A is a schematic diagram of an application scenario;
FIG. 22B is a schematic diagram of an application scenario;
FIG. 23 is a flowchart of a method for controlling an electronic device by a wearable device; and
FIG. 24 is a schematic structural diagram of a chip system.

### DESCRIPTION OF EMBODIMENTS

The following terms "first" and "second" are used only for purpose description, and are not understood to indicate or imply relative importance or implicitly indicate a quantity of indicated technical features. Therefore, a feature defined as "first" or "second" may explicitly or implicitly include one or more of the features. In the description of this embodiment, unless otherwise stated, "a plurality of" means two or more.

The following describes the embodiments of this embodiment in detail with reference to the accompanying drawings.

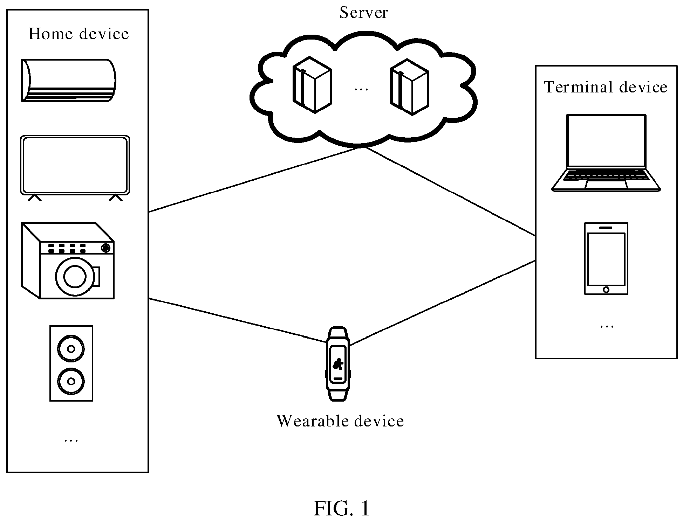

FIG. 1 is a schematic diagram of a system according to an embodiment of this application. The system may include a home device, a server (for example, a server corresponding to Honor Cloud), a terminal device, and a wearable device. A first application (for example, a smart life application) is installed in the terminal device. The server is a management server of the first application.

For example, the terminal device in this embodiment of this application may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR), a virtual reality (virtual reality, VR) device, or the like that may be installed in the foregoing first application. A specific form of the terminal device is not specifically limited in this embodiment of this application.

The home device provided in this embodiment of this application may be a device that can access a home wireless local area network, such as a large screen (television), a speaker, a camera, an air conditioner, a refrigerator, a smart curtain, a desk lamp, a pendant lamp, a rice cooker, a security device (such as a smart electronic lock), a personal computer (personal computer, PC), or the like. In addition, the home device in this embodiment of this application may be an in-vehicle speaker, an in-vehicle air conditioner, or the like. A specific form of the home device is not specifically limited in this embodiment of this application. The home device may include a wireless fidelity (wireless fidelity, WIFI) module, so as to connect to the home local area network.

The wearable device provided in this embodiment of this application may be a smart watch, a smart band, or the like.

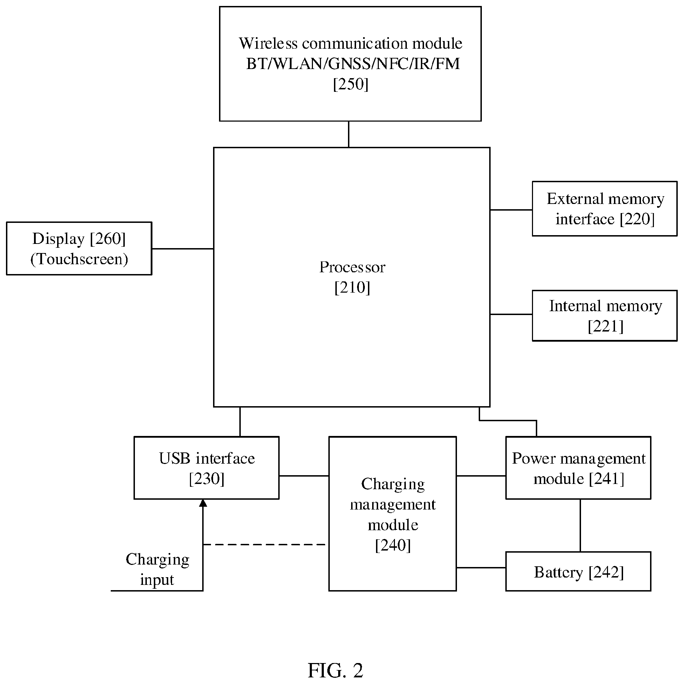

FIG. 2 shows a schematic structural diagram of a terminal device. As shown in FIG. 2, a terminal device 200 may include a processor 210, an external memory interface 220, an internal memory 221, a universal serial bus (universal serial bus, USB) interface 230, a charging management module 240, a power management module 241, a battery 242, a wireless communication module 250, a display 260, and the like.

It may be understood that a structure shown in this embodiment does not constitute a specific limitation on the first electronic device. In some other embodiments, the first electronic device may include more or fewer components than those shown in the figure, or some components may be combined, or some components may be split, or components are arranged in different manners. The illustrated components may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a neural center and a command center of the terminal device 200. The controller may generate an operation control signal based on an instruction operation code and a time sequence signal, to control instruction reading and instruction execution.

A memory may be disposed in the processor 210, and is configured to store an instruction and data. In some embodiments, the memory in the processor 210 is a cache memory. The memory may store an instruction or data that is just used or used cyclically by the processor 210. If the processor 210 needs to use the instruction or the data again, the instruction or the data may be directly invoked from the memory. Therefore, repeated access is avoided, a waiting time of the processor 210 is reduced, and system efficiency is improved.

In some embodiments, the processor 210 may include one or more interfaces. The interface may include an I2C interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a USB interface.

It may be understood that an interface connection relationship between the modules shown in this embodiment is merely an example for description, and does not constitute a limitation on the structure of the terminal device 200. In some other embodiments, the terminal device 200 may alternatively use an interface connection manner different from that in the foregoing embodiment, or use a combination of a plurality of interface connection manners.

The charging management module 240 is configured to receive a charging input from a charger. The charger may be a wireless charger, or may be a wired charger. While charging the battery 242, the charging management module 240 may further supply power to an electronic device by using the power management module 241.

The power management module 241 is configured to connect the battery 242, the charging management module 240 and the processor 210. The power management module 241 receives input of the battery 242 and/or the charging management module 240, and supplies power to the processor 210, the internal memory 221, the external memory, the display 260, the camera 293, and the wireless communication module 250, and the like. In some embodiments, the power management module 241 and the charging management module 240 may alternatively be disposed in a same component.

The wireless communication module 250 may provide a solution to wireless communication applied to the terminal device 200, for example, a WLAN (such as Wi-Fi), Bluetooth, a global navigation satellite system (global navigation satellite system, GNSS), frequency modulation (frequency modulation, FM), near field communication (near field communication, NFC), and an infrared technology(infrared, IR). For example, in this embodiment of this application, the terminal device 200 may establish a Bluetooth connection to the terminal device (for example, a wireless headset 100) by using the wireless communication module 250.

The wireless communication module 250 may be one or more components that integrate at least one communication processing module. The wireless communication module 250 receives an electromagnetic wave over an antenna 2, performs frequency modulation and filtering processing on an electromagnetic wave signal, and sends a processed signal to the processor 210. The wireless communication module 250 may further receive a to-be-sent signal from the processor 210, perform frequency modulation and amplification on the signal, and convert the signal into an electromagnetic wave for radiation over the antenna 2.

The terminal device 200 implements a display function by using the GPU, the display 260, the application processor, and the like. The GPU is a microprocessor for image processing, and is connected to the display 260 and the application processor. The GPU is configured to perform mathematical and geometric calculation and is configured to perform graphics rendering. The processor 210 may include one or more GPUs that execute program instructions to generate or change display information.

The display 260 is configured to display an image, a video, and the like. The display 260 includes a display panel.

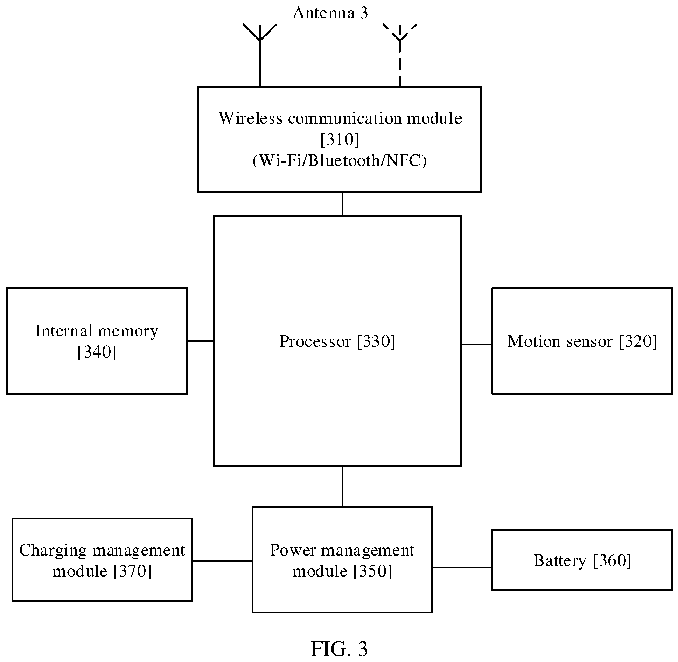

FIG. 3 shows a schematic diagram of a structure of a wearable device. As shown in FIG. 3, the wearable device may include a wireless communication module 310, a motion sensor 320, a processor 330, an internal memory 340, a power management module 350, a battery 360, a charging management module 370, an antenna 3, and the like.

In some embodiments, the wireless communication module 310 may include an NFC chip, and the NFC chip may include a device host (device host, DH) and an NFC controller (NFC controller, NFCC). The DH may manage the NFCC, such as initialization, configuration and power management. The NFCC may be responsible for performing physical data transmission by using an antenna. In addition, the NFC chip can perform processing such as amplification, analog-to-digital conversion, digital-to-analog conversion, and storage on a signal.

A wireless communication function of the wearable device may be implemented by using the antenna 3, the wireless communication module 310, and the like.

In addition, the processor 330 may include one or more processing units. For example, the processor 330 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU).

In some embodiments, the processor 330 may include one or more interfaces. The interface may include an I2C interface, an I2S interface, a PCM interface, a UART interface, a MIPI, a GPIO interface, a SIM card interface, and/or a USB interface. It may be understood that an interface connection relationship between the modules that is shown in this embodiment of this application is merely an example for description, and does not constitute a limitation on the structure of the wearable device. In some other embodiments of this application, the wearable device may alternatively use an interface connection manner different from that in the foregoing embodiment, or use a combination of a plurality of interface connection manners.

The internal memory 340 may be configured to store one or more computer programs, where the one or more computer programs include an instruction.

The motion sensor 320 may include an acceleration sensor, a gyroscope, and the like. When the wearable device is a wristband or a watch, based on the foregoing motion sensor 320, the wristband or the watch may perform card swipe action detection.

It may be understood that a structure shown in an embodiment of this application does not constitute a specific limitation on the wearable device. In some other embodiments of this application, the wearable device may include more or fewer components than those shown in the figure, or some components may be combined, or some components may be split, or components are arranged in different manners. The illustrated components may be implemented by hardware, software, or a combination of software and hardware.

At present, during a meeting, a host of the meeting may use a laser pen to remotely control a computer to turn pages of a PPT. In the smart home field, a user may control a smart home device by using a terminal device (such as a mobile phone) connected to the smart home device. However, when the PPT is remotely controlled by using the laser pen, the user needs to always hold the laser pen, which prevents the user from giving a gesture explanation. In addition, when the mobile phone is used to control the smart home device, the user needs to open, on the mobile phone, an application (application, APP) corresponding to the smart home device. Operations are relatively cumbersome. It can be learned that an existing manner of performing proximity control on an electronic device is cumbersome and inconvenient.

**In** view of this, an embodiment of this application provides a method for controlling an electronic device by a wearable device. The user may perform a preset action in a case in which the wearable device is worn The wearable device may identify its own motion track and generate motion data that matches the motion track, so as to generate and send a control instruction based on the motion data and control the electronic device. Therefore, the user may perform different actions in a case in which the wearable device is worn, so as to implement control over different functions of the electronic device. This is simple and convenient, and user experience can be improved.

Next, that the wearable device is a smart band is used as an example to describe a process in which the smart band controls different electronic devices in different scenarios.

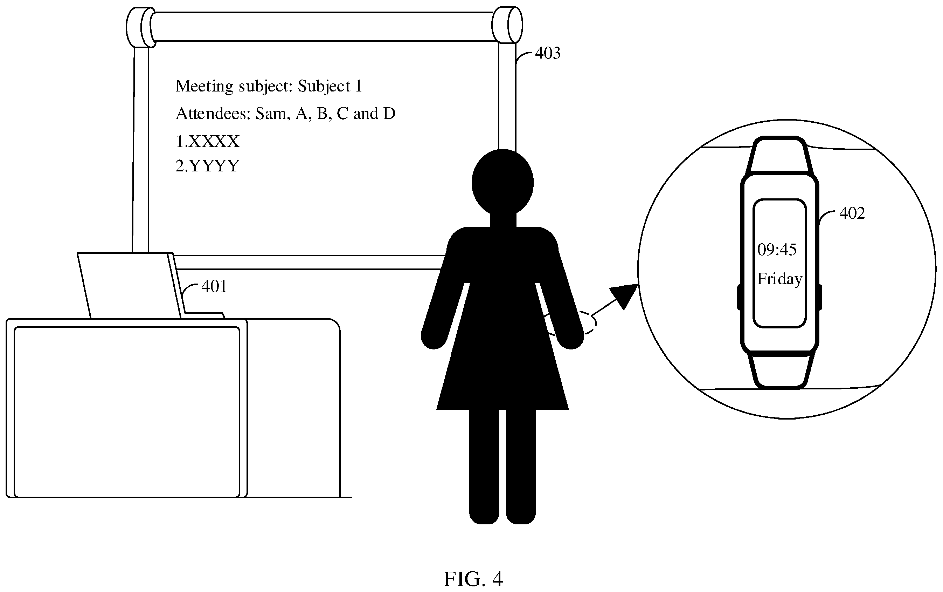

For example, FIG. 4 shows a schematic diagram of a meeting scenario. In the meeting scenario, the user may use a projection screen 403 as a display screen of a personal computer 401, so as to display content that needs to be displayed on the personal computer 401. In this scenario, the user may control, by using the smart band 402 worn by the user, content displayed on the projection screen 403 to perform an operation such as page turning.

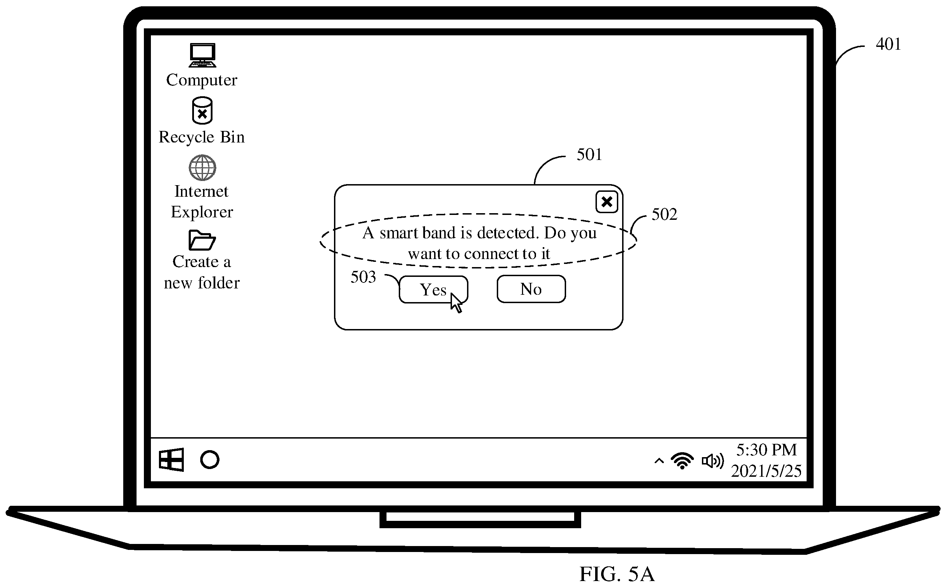

If the smart band 402 is not connected to the personal computer 401, a communication connection between the smart band 402 and the personal computer 401 needs to be established first. For example, the user may perform a first operation, so that the smart band 402 establishes a communication connection to the personal computer 401. For example, the first operation may be an operation in which the user carries the smart band 402 to get close to the personal computer 401. It may be understood that an NFC chip is disposed on both the smart band 402 and the personal computer 401. When a distance between the smart band 402 and the personal computer 401 is less than a preset connection distance, the personal computer 401 may display a connection prompt box 501 shown in FIG. 5A. For another example, the first operation may alternatively be an operation of enabling a Bluetooth function of the smart band 402. A chip that can be used to implement Bluetooth communication is disposed on the smart band 402 and the personal computer 401. The personal computer 401 may display the connection prompt box 501 shown in FIG. 5A after the smart band 401 is found. For another example, the first operation may alternatively be an operation for the user to add the smart band 402 to a local area network operation connected to the personal computer 401. When the personal computer 401 detects that the personal computer 401 and the smart band 402 join a same local area network, the connection prompt box 501 shown in FIG. 5A may be displayed. That is, the smart band 402 may communicate with the personal computer 401 by using any one of WIFI, Bluetooth, or NFC.

The connection prompt box 501 may include prompt information 502 and an option 503. The prompt information 502 is used to prompt the user that the personal computer 401 detects a new smart band, and query the user whether to connect. For example, the prompt information 502 may be "A smart band is detected. Do you want to connect to it". The personal computer 401 may receive an operation in which the user taps the option 503. In response to the operation, the personal computer 401 establishes a connection to the smart band 402. It may be understood that the connection may be any one of a WIFI connection, a Bluetooth connection, and an NFC connection.

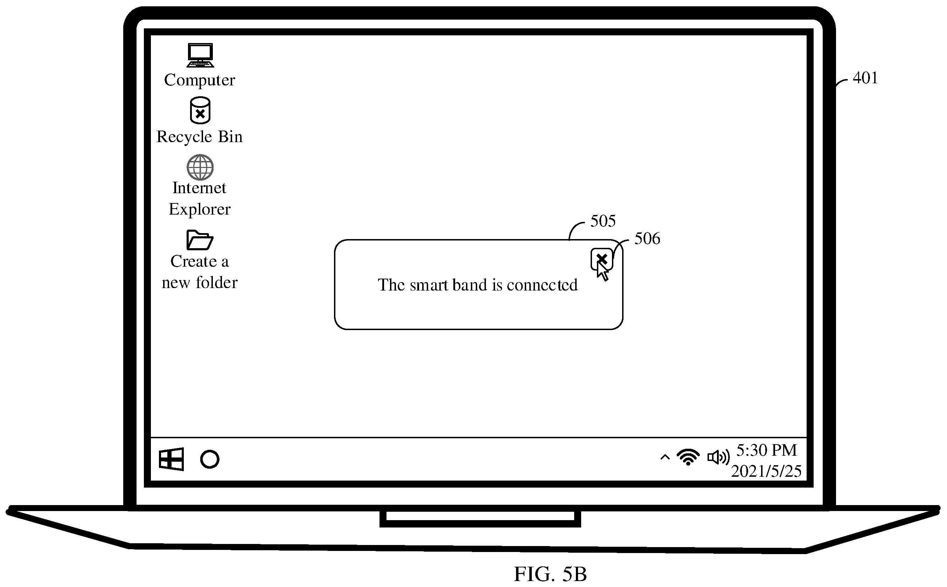

In a possible design, the personal computer 401 may display a connection status prompt box 505 shown in FIG. 5B after establishing a connection to the smart band 402. The connection status prompt 505 is used to notify the user that the personal computer 401 is connected to the smart band 402. For example, the connection status prompt box 505 may display "The smart band is connected". The connection status prompt 505 may include a close option 506. The personal computer 401 may receive an operation in which the user taps the close option 506. In response to the operation, the personal computer 401 may close the connection status prompt box 505. In a possible design, if the personal computer 401 does not detect, within a preset time, an operation of tapping the close option 506 of the connection status prompt box 505 by the user, the personal computer 401 may automatically close the connection status prompt box 505.

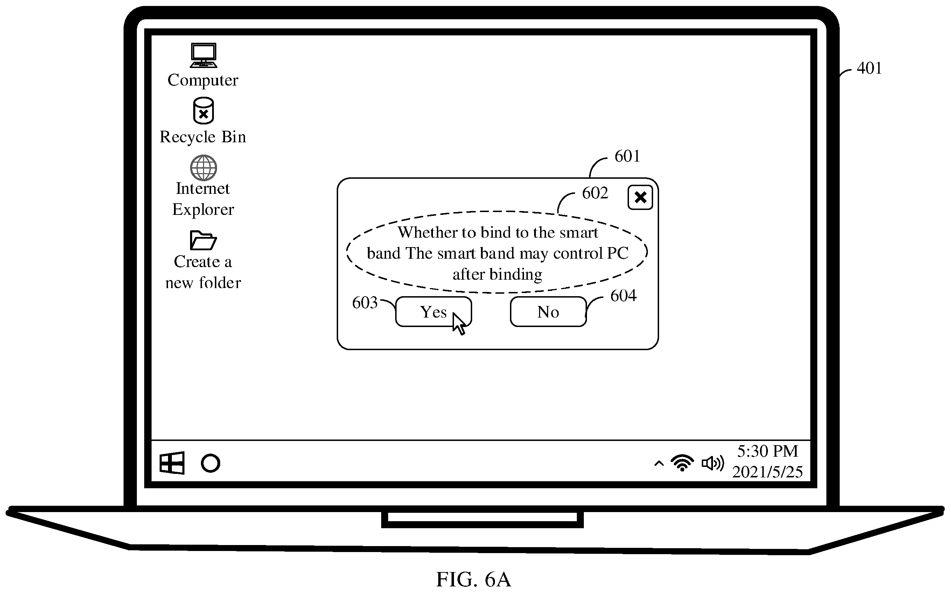

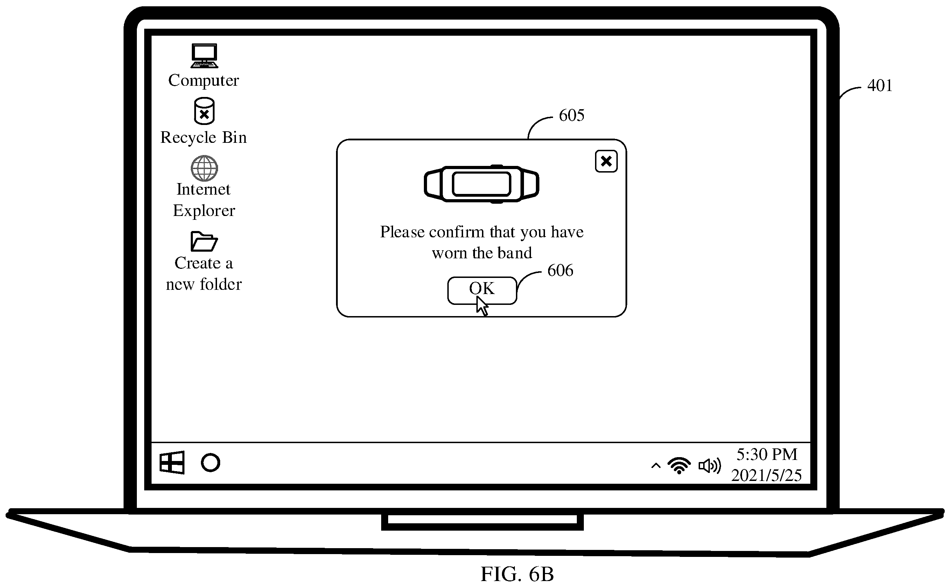

After the personal computer 401 establishes a connection to the smart band 402, as shown in FIG. 6A, the personal computer 401 may display a binding prompt box 601. The binding prompt box 601 may include prompt information 602 and an option 603. The prompt information 602 is used to query the user whether to bind the personal computer 401 to the smart band 402, and describe that after the personal computer 401 is bound to the smart band 402, the smart band 402 may control the personal computer 401. For example, the prompt information 602 may be "Whether to bind to the smart band? The smart band may control PC after binding." If the user may accept that the personal computer 401 is bound to the smart band 402, the user may tap the option 603. The personal computer 401 may receive an operation in which the user taps the option 603. In response to the operation, as shown in FIG. 6B, the personal computer 401 may display a wearing confirmation prompt box 605. The wearing confirmation prompt box 605 is used to query whether the user has worn the smart band 402. The smart band 402 may monitor a wearing status of the smart band 402. The wearing status is used to indicate that the smart band 402 is in a worn state or a detached state. In a possible design, a pressure sensor may be disposed on the smart band 402, and the smart band 402 may confirm a wearing status based on data change of the pressure sensor. In addition, the smart band 402 sends wearing status information to a terminal device. After wearing the smart band 402, the user may tap an OK option 606 in the wearing confirmation prompt box 605. The personal computer 401 may receive an operation in which the user taps the OK option 606. In response to the operation, the personal computer 401 may confirm, based on the wearing status information, that the smart band 402 is in a worn state or in a detached state (not worn).

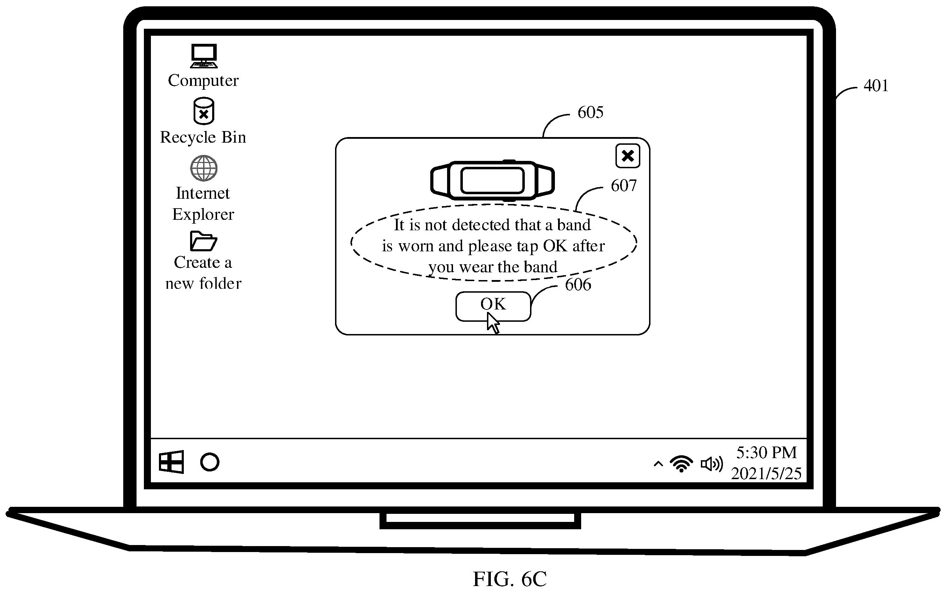

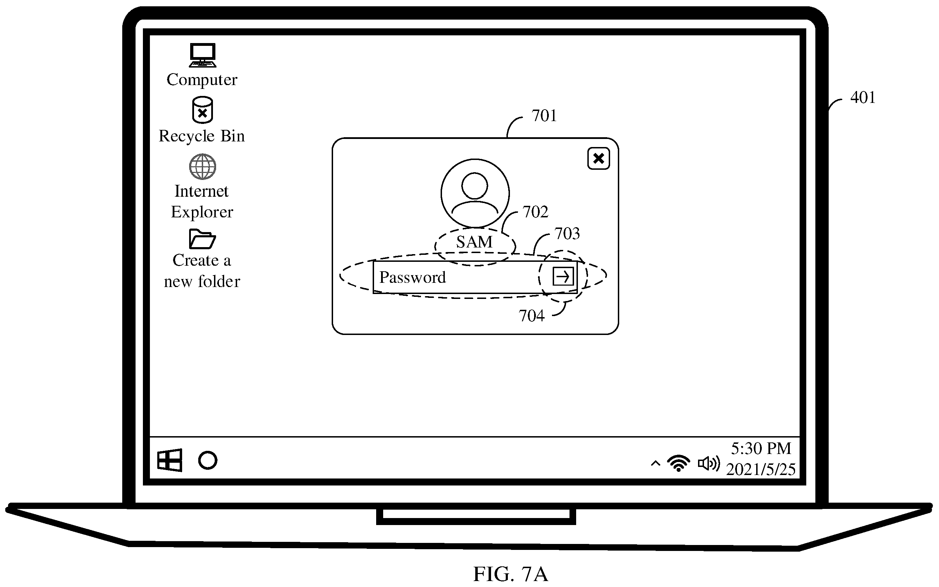

If the wearing status information indicates that the smart band 402 is in a detached state, the personal computer 401 may confirm that the smart band 402 is in a detached state. As shown in FIG. 6C, the personal computer 401 displays prompt information 607 in the wearing confirmation prompt box 605. The prompt information 607 is used to notify the user that the band needs to be worn again. For example, the prompt information 607 may be "It is not detected that a band is worn and please tap OK after you wear the band". After wearing the smart band 402, the user may tap the OK option 606 again. The personal computer 401 may receive an operation in which the user taps the OK option 606. In response to the operation, the personal computer 401 may again confirm, based on the wearing status information, that the smart band 402 is in a worn state or is in a detached state. If the wearing status information indicates that the smart band 402 is in a worn state, the personal computer 401 may confirm that the smart band 402 is in a worn state. As shown in FIG. 7A, the personal computer 401 may display a password verification block 701. The password verification box 701 may display an account name 702, a password input bar 703, and an input option 704. The account name 702 may be preset by the user on a terminal device 701, for example, may be a user name of a Windows system, such as SAM. The password input bar 703 is used for the user to input a password. After entering the password in the password input bar 703, the user may tap the input option 704 to indicate that the password is entered. Certainly, in another implementation, the user may also use an Enter key on a physical/virtual keyboard to indicate that password is input. After receiving the password entered by the user, the personal computer 401 needs to verify whether the password entered by the user is consistent with a preset password. The preset password is a password that matches the account name 702. For example, the account name 702 and the preset password may be an account name and a password of a power-on interface or a lock screen of the personal computer 401, that is, the personal computer 401 can normally be powered on and unlocked only after the user enters a correct account name and a correct password. It may be understood that, by verifying whether the password entered by the user is consistent with the preset password, whether a wearer of the smart band 402 has permission to control the personal computer 401 may be identified. When the password entered by the user is consistent with the preset password, it may be considered that the wearer of the smart band 402 is a same person as a holder of the personal computer 401, or it is considered that the wearer of the smart band 402 has permission to control the personal computer 401. On the contrary, when the password entered by the user is inconsistent with the preset password, it is considered that the holder of the smart band 402 does not have permission to control the personal computer 401.

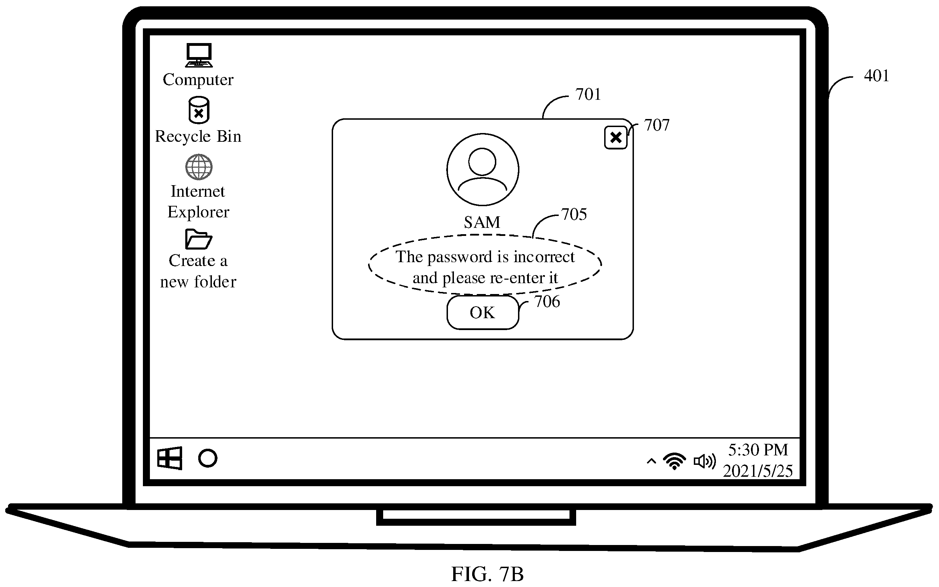

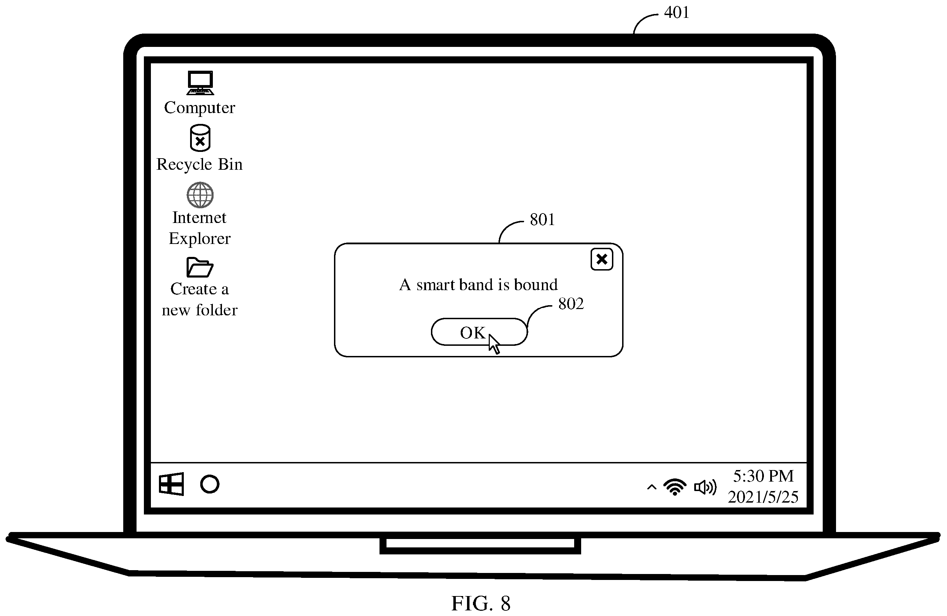

Therefore, if a verification result is that the password entered by the user is inconsistent with the preset password, as shown in FIG. 7B, the personal computer 401 may display prompt information 705 in the password verification block 701, where the prompt information 705 is used to prompt the user that the password entered by the user is incorrect. For example, the prompt information 705 may be "The password is incorrect, and please re-enter it". In addition, the password verification block 701 further includes an OK option 706 and a close option 707. If the user needs to re-enter the password, the OK option 706 may be tapped. The personal computer 401 may receive an operation in which the user taps the OK option 706. In response to the operation, the personal computer 401 may re-display the password verification block 701 shown in FIG. 7A, so that the user re-enters the password. If the user does not need to re-enter the password, the user may tap the close option 707. The personal computer 401 may receive an operation in which the user taps the close option 707. In response to the operation, the personal computer 401 may close the password verification block 701. If the verification result is that the password entered by the user is consistent with the preset password, the personal computer 401 may initiate a binding confirmation request to the smart band 402. In an optional implementation, as shown in FIG. 8, the personal computer 401 may display a binding confirmation prompt box 801. The binding confirmation prompt box 801 is used to remind the user that the personal computer 401 is bound to the smart band 402. For example, the binding confirmation prompt box 801 may display "The smart band is bound". In addition, the binding confirmation prompt box 801 may further include an OK option 802. The personal computer 401 may receive an operation performed by the user on the OK option 802. In response to the operation, the personal computer 401 may close the binding confirmation prompt box 801.

After the personal computer 401 establishes a binding relationship with the smart band 402, the user may control the personal computer 401 by using the smart band 402, so as to switch the content displayed on the projection screen 403. Specifically, the user may perform a preset action in a case in which the smart band 402 is worn. After generating motion data that matches a motion track of the smart band 402, the smart band 402 queries from a preset motion track-instruction matching list to find a control instruction that matches the motion track (motion data), and send the control instruction to the personal computer 401. In response to the control instruction, the personal computer 401 performs an operation corresponding to the control instruction, such as, page forward, page backward, maximization, minimization, or the like.

For example, the motion track-instruction matching list may be shown in Table 1.

**Table 1**

| Motion track | Control instruction |
|---|---|
| Clockwise rotation | Page backward |
| Counterclockwise rotation | Page forward |
| Draw Z | Minimization |
| Draw V | Maximization |
| ... | ... |

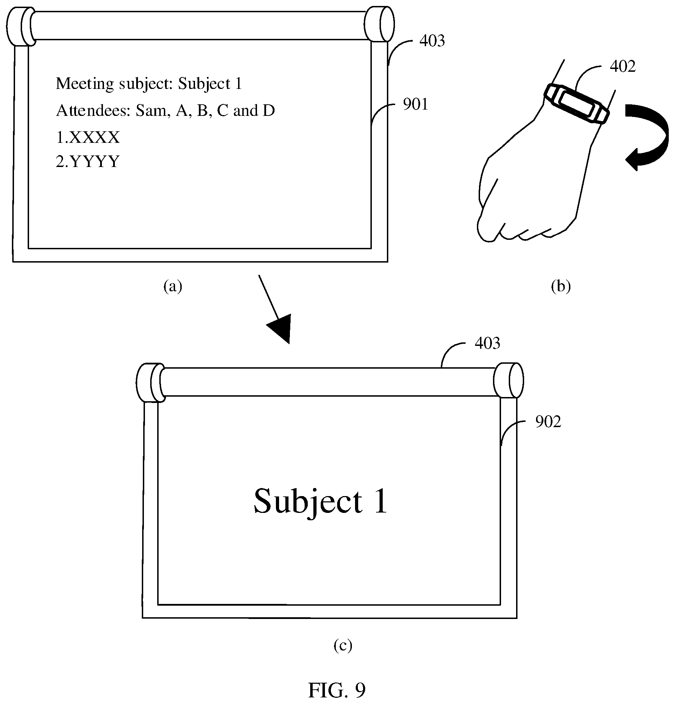

As shown in (a) in FIG. 9, the projection screen 403 may display an interface 901. For example, the interface 901 may include a table of content for the file 1. For example, the interface 901 may include information such as "Meeting subject: Subject 1. Attendees: Sam, A, B, C, and D". When the user needs to display content of a next page of the file 1, as shown in (b) in FIG. 9, the user may drive the smart band 402 to rotate in a clockwise direction. The smart band 402 queries from the preset motion track-instruction matching list to find that a control instruction corresponding to the motion track is a page backward instruction, and send the page backward instruction to the personal computer 401. Therefore, the personal computer 401 may receive the page backward instruction. In response to the instruction, the personal computer 401 may display a next page of the file 1. Therefore, as shown in (c) in FIG. 9, the projection screen 403 displays an interface 902, and the interface 902 is a next page of the interface 901.

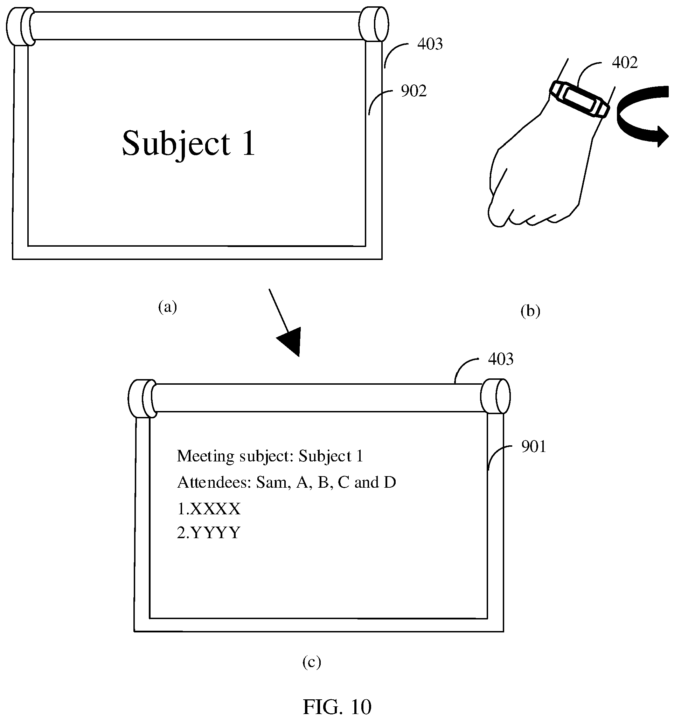

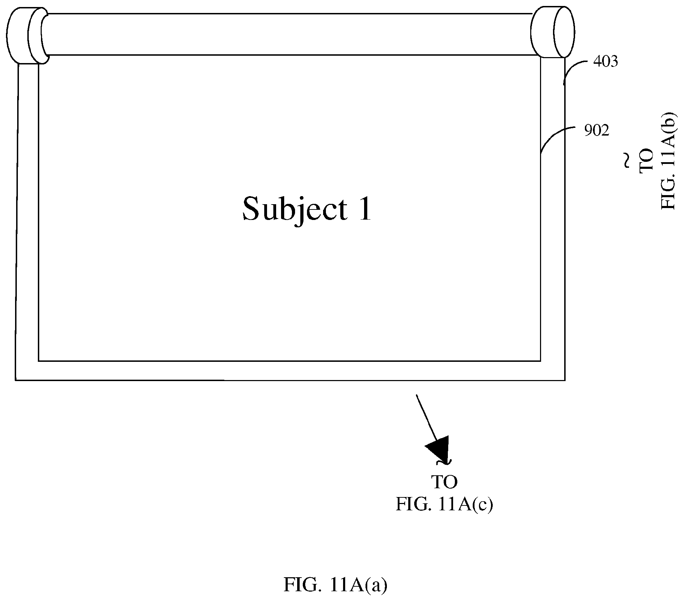

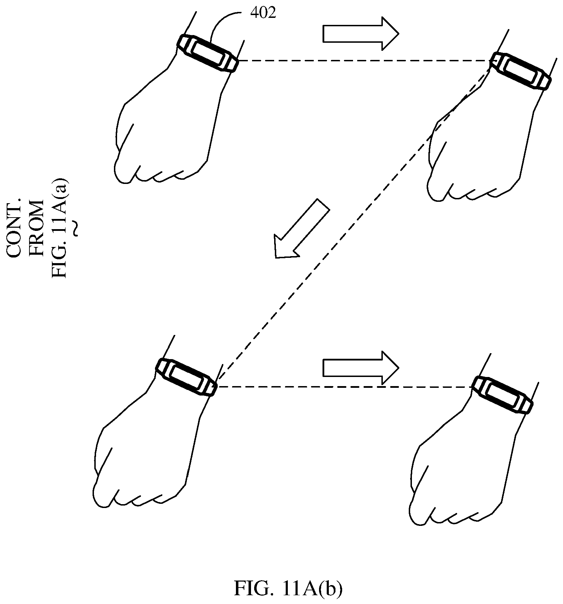

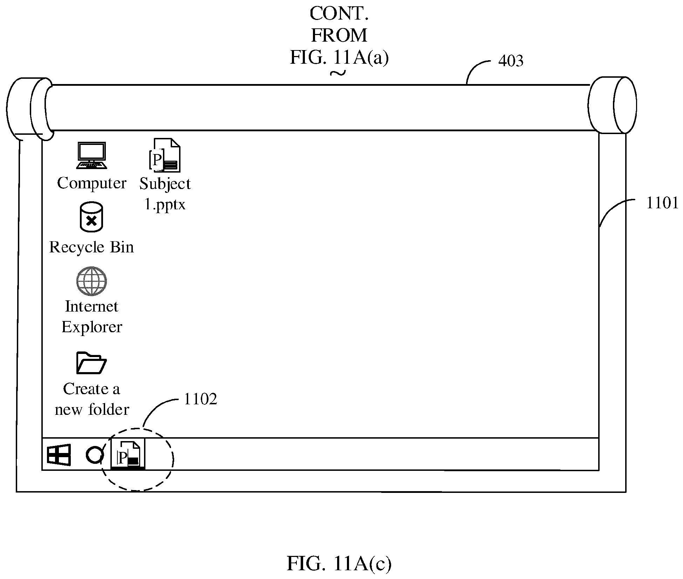

As shown in (a) in FIG. 10, the projection screen 403 may display the interface 902. For example, the interface 902 may include a title of the file 1 (that is, "Subject 1"). When the user needs to display a previous page of a current page (that is, a previous page of the file 1), as shown in (b) in FIG. 10, the user may drive the smart band 402 to rotate in a counterclockwise direction. The smart band 402 queries from the preset motion track-instruction matching list to find that a control instruction corresponding to the motion track is a page forward instruction, and send the page forward instruction to the personal computer 401. Therefore, the personal computer 401 may receive the page forward instruction. In response to the instruction, the personal computer 401 may display a previous page of a current page. Therefore, as shown in (c) in FIG. 10, the projection screen 403 displays the interface 901, and the interface 901 is a previous page of the interface 902. As shown in FIG. 11A(a), the projection screen 403 may display the interface 902. When the user needs to minimize the file 1, as shown in FIG. 11A(b), the user may drive the smart band 402 to draw a "Z". The smart band 402 queries from the preset motion track-instruction matching list to find that a control instruction corresponding to the motion track is a minimization instruction, and send the minimization instruction to the personal computer 401. Therefore, the personal computer 401 may receive the minimization instruction. In response to the instruction, the personal computer 401 may minimize a window of the file 1. Therefore, as shown in FIG. 11A(c), the projection screen 403 displays a desktop 1101, and an icon 1102 of the file 1 may be displayed on the desktop 1101.

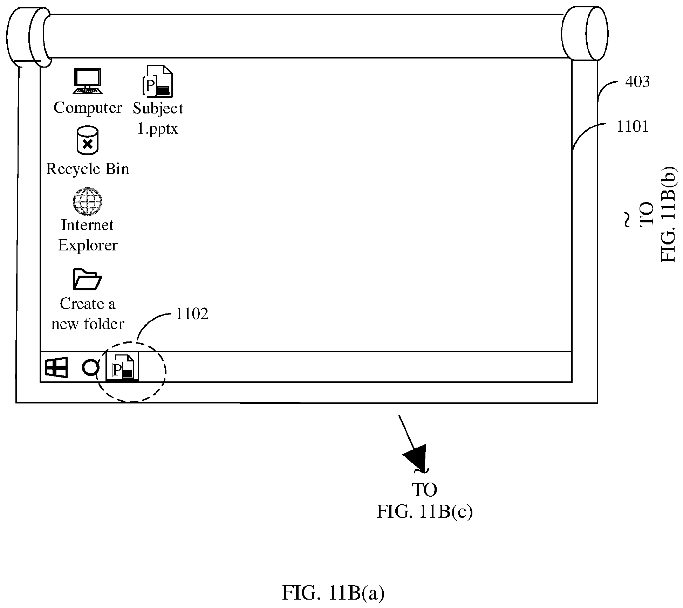

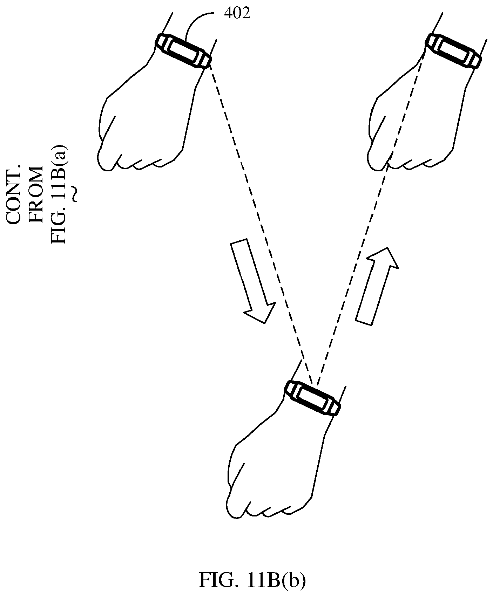

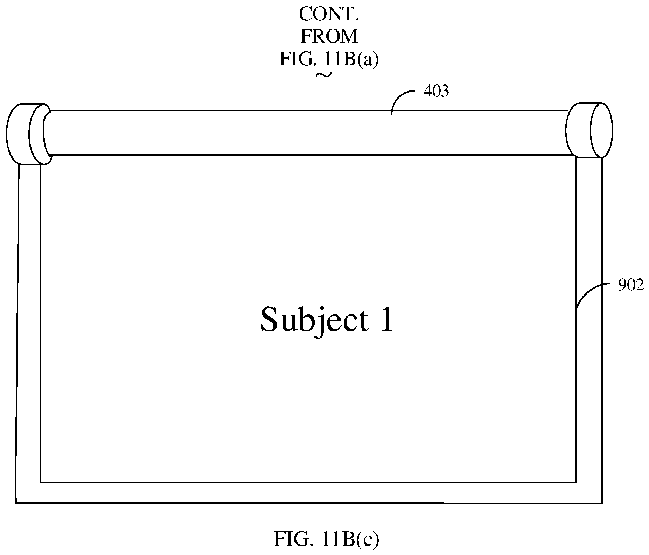

As shown in FIG. 11B(a), the projection screen 403 may display the desktop 1101, and the desktop 1101 includes the icon 1102 of the file 1. It can be seen that the file 1 is in a minimized state. When the user needs to maximize the file 1, as shown in FIG. 11B(b), the user may drive the smart band 402 to draw a "V". The smart band 402 queries from the preset motion track-instruction matching list to find that a control instruction corresponding to the motion track is a maximization instruction, and send the maximization instruction to the personal computer 401. Therefore, the personal computer 401 may receive the maximization instruction. In response to the instruction, the personal computer 401 may maximize the window of the file 1. Therefore, as shown in FIG. 11B(c), the projection screen 403 displays the interface 902 of the file 1.

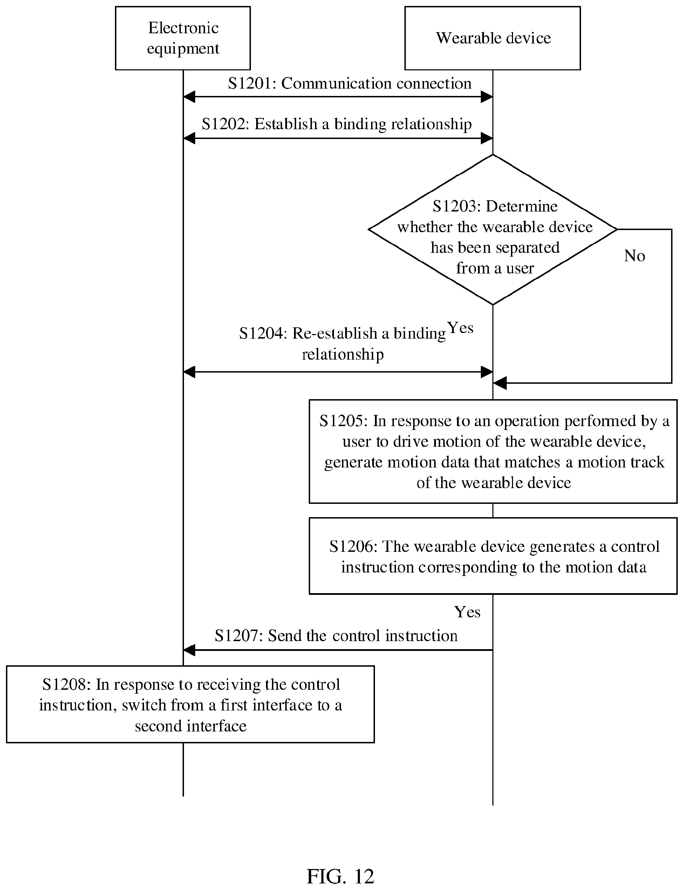

FIG. 12 is a flowchart of a method for controlling an electronic device by a wearable device according to an embodiment of this application. As shown in FIG. 12, the method includes:
S1201: An electronic device establishes a communication connection to a wearable device.
   The electronic device may communicate with the wearable device in any one of a communication manner such as NFC, WIFI, or Bluetooth. For example, the electronic device may be a personal computer 401, and the wearable device may be a smart band 402.
S1202: The electronic device establishes a binding relationship with the wearable device.
   It may be understood that establishing a binding relationship may mean that the smart band is bound to the electronic device by using a preset account name and a preset password. For example, reference may be made to FIG. 6A to FIG. 8 and corresponding content.
S1203: The wearable device determines whether the wearable device has been separated from a user.

If the wearable device has been separated from the user, S1204 is performed. If the wearable device has not been separated from the user, S1205 is performed.

It may be understood that, if the wearable device has been separated from the user, it may be considered that a holder of the smart band 402 may change. Therefore, the holder of the smart band 402 needs to be verified again, and S1204 may be performed. If the wearable device has not been separated from the user, it may be considered that a wearer of the smart band 402 does not change. The smart band 402 has permission to control the electronic device 401, and S1205 may be performed.

S1204: The wearable device re-establishes a binding relationship with the electronic device.

In an optional implementation, the wearable device may initiate a binding request to the electronic device. After receiving the binding request, the electronic device may re-display a password input block 701 shown in FIG. 7A. The user may enter a correct password by using the password input box 701, so as to re-establish a binding relationship between the wearable device and the electronic device.

S1205: In response to an operation performed by the user to drive motion of the wearable device, the wearable device generates motion data that matches a motion track of the wearable device . In an optional implementation, the wearable device may identify an action of the user by using a motion sensor of the wearable device, and generate motion data that matches a motion track of the wearable device.

S1206: The wearable device generates a control instruction corresponding to the motion data. The wearable device queries from a preset motion track-instruction matching list to find a control instruction corresponding to the motion track (that is, the motion data).

S1207: The wearable device sends a control instruction to the electronic device.

S1208: In response to receiving the control instruction, the electronic device switches from a first interface to a second interface.

The second interface is an interface displayed after the electronic device performs an operation corresponding to the control instruction on a first operation target, and the first operation target includes any one of a presentation document, a video file, an audio file, and a document. For example, the first operation target may be a presentation document, the first interface may be an interface 901 shown in (a) in FIG. 9, and the second interface may be an interface 902 shown in (c) in FIG. 9. For another example, the first interface may be an interface 902 shown in FIG. 11A(a), and the second interface may be an interface 1102 shown in FIG. 11A(c).

In addition, it should be noted that the operation corresponding to the control instruction includes any one of page forward, page backward, maximization, minimization, volume increase, and volume reduction.

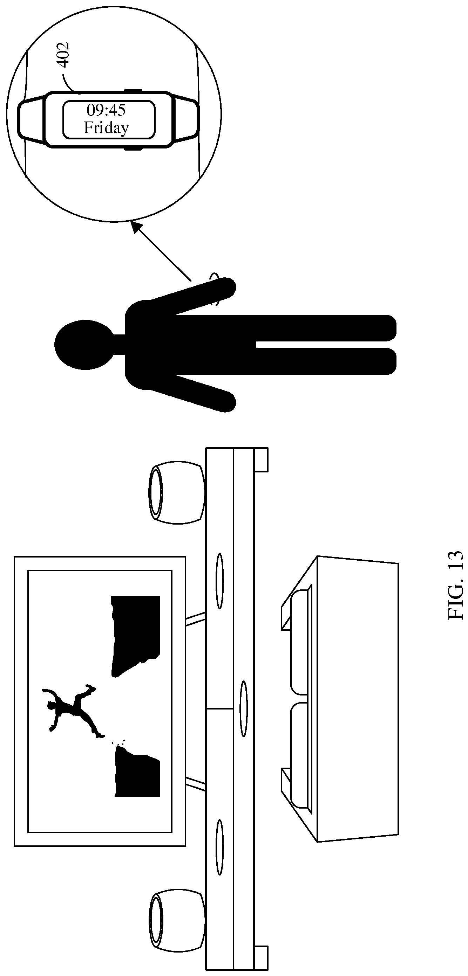

FIG. 13 shows a schematic diagram of a smart home scenario. In a smart home scenario, the user may control, by using the smart band 402, a home device such as a smart television and a smart speaker. It should be noted that home devices such as the smart television and the smart speaker are connected to a home local area network by using WIFI modules of the smart television and the smart speaker. If the home device needs to be controlled by using the smart band 402, the smart band 402 needs to be added to the home local area network. Next, that a terminal device is a mobile phone is used as an example to describe a process of adding the smart band 402 to the home local area network.

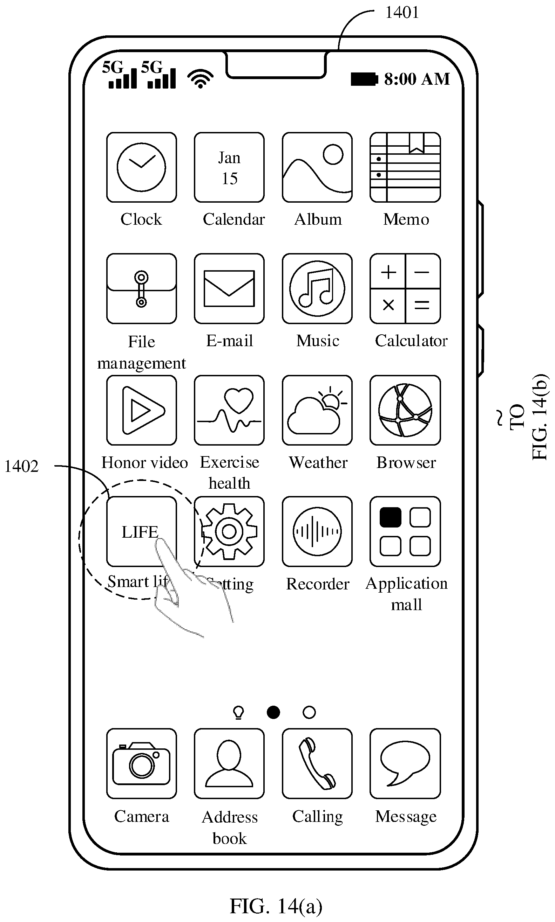

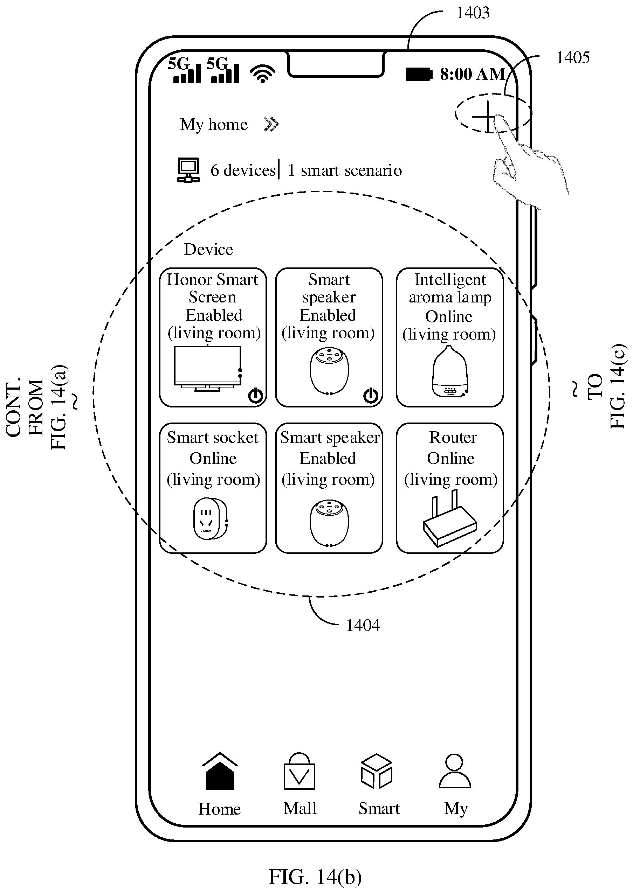

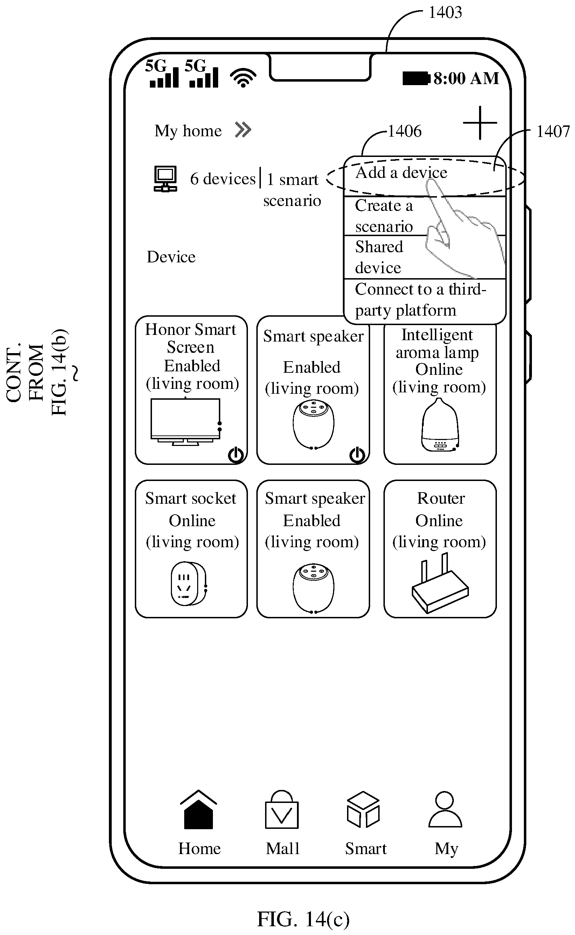

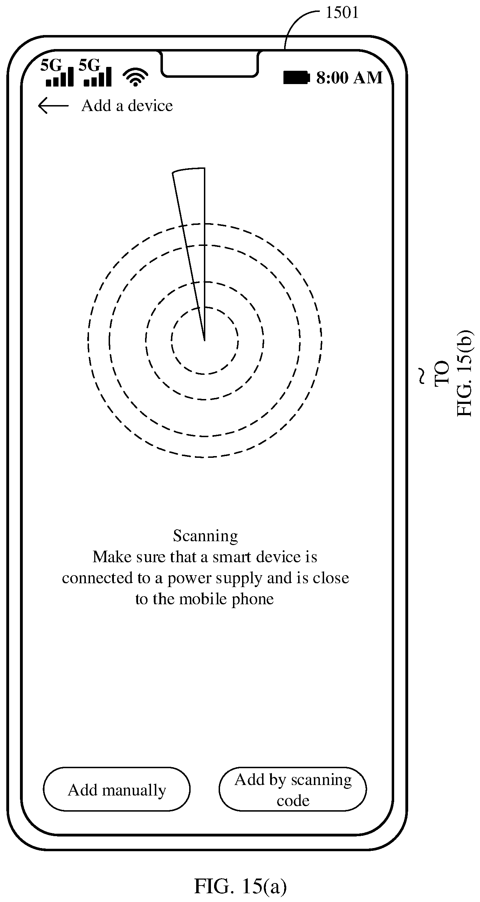

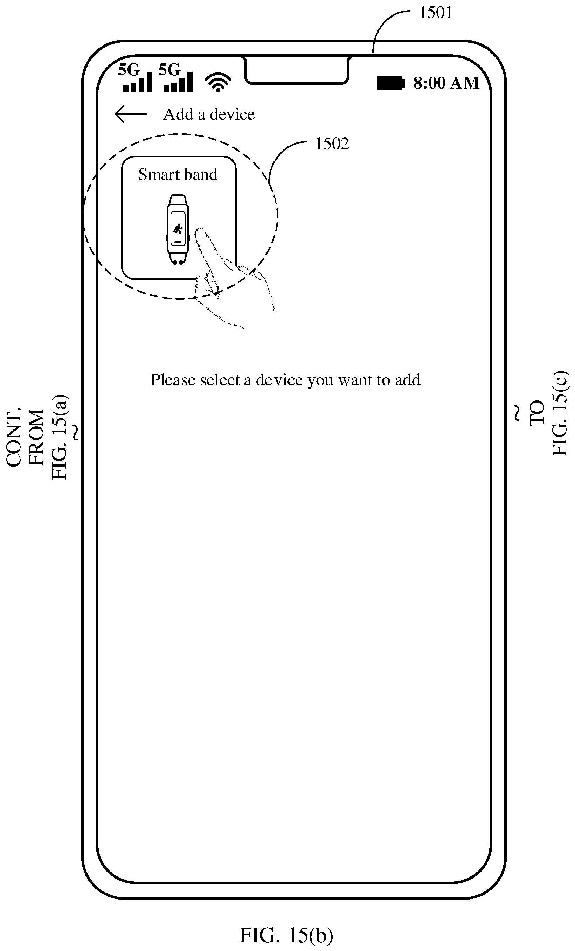

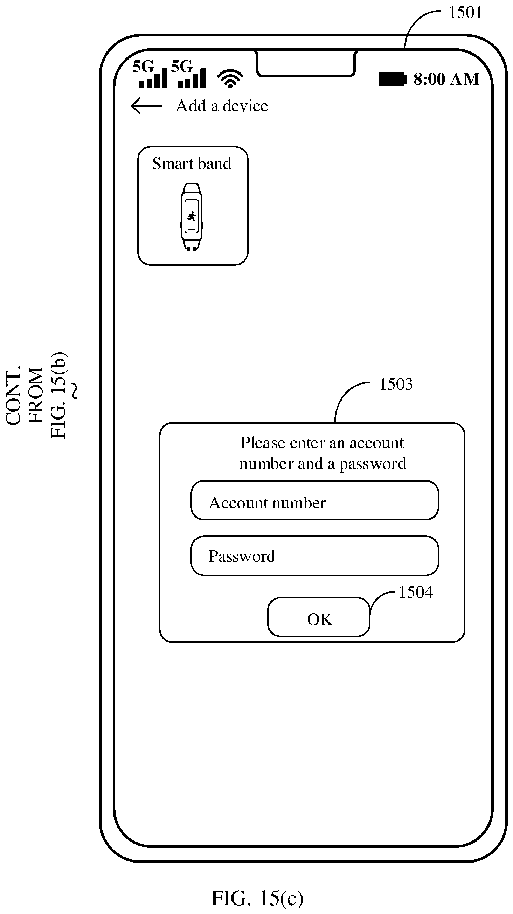

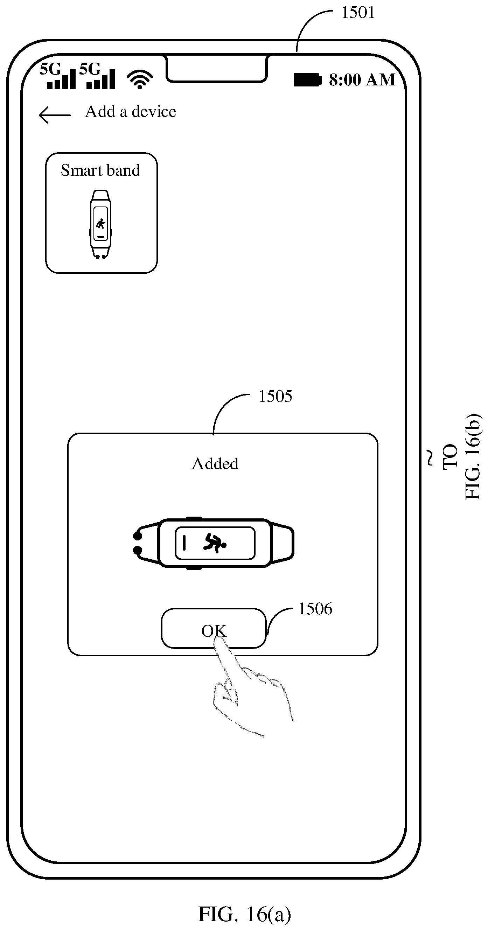

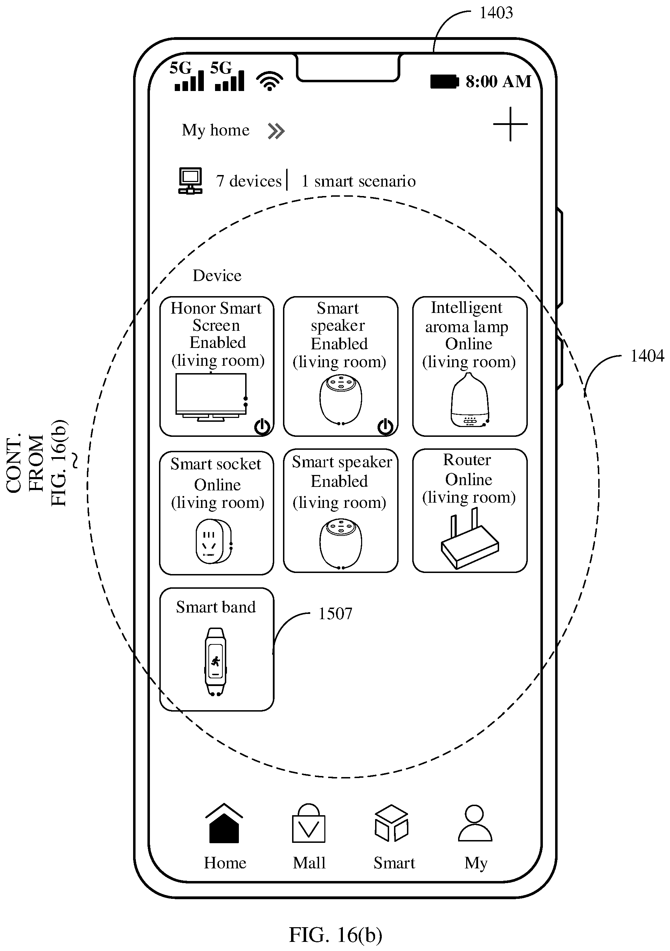

As shown in FIG. 14(a), the mobile phone may display a main interface 1401. The main interface 1401 may include an icon 1402 of a smart home application. The mobile phone may receive an operation in which the user taps the icon 1402 of the smart home application. In response to the operation, the mobile phone may open the smart home application 1402 to enter an interface 1403 shown in FIG. 14(b). The interface 1403 may include a display area 1404 and an adding option 1405, and the display area 1404 may be used to display a device connected to the home local area network. For example, devices connected to the home local area network may include an Honor television, a smart speaker, a smart aroma lamp, a smart socket, a smart speaker, a router, and the like. The mobile phone may receive an operation in which the user taps the adding option 1405. In response to the operation, as shown in FIG. 14(c), the mobile phone may display a function block 1406. The function block 1406 may include an "Add a device" option 1406, a "Create a scenario" option, a "Shared device" option, and the like. The mobile phone may receive an operation in which the user taps the "Add a device" option 1406. In response to the operation, a device search interface 1501 is shown in FIG. 15(a). The device search interface 1501 may display the word "Searching". After the mobile phone finds the smart band 402, as shown in FIG. 15(b), an icon 1502 of the smart band 402 may be displayed on the device search interface 1501. The mobile phone may receive an operation in which the user taps the icon 1502. In response to the operation, as shown in FIG. 15(c), the mobile phone may display an input block 1503. After the user enters an account name and a password in the input box 1503, the user may tap an OK option 1504 in the password input box 1503. In response to the tap operation performed by the user on the OK option 1504, the mobile phone may verify whether the account name and the password match. If the account name matches the password, it may be considered that the holder of the smart band 402 has permission to connect to the home local area network, and the mobile phone may display a prompt box 1505 shown in FIG. 16(a). The prompt box 1505 is used to prompt the user that the smart band 402 has been added to the home local area network. The mobile phone may receive an operation performed by the user on an OK option 1506 of the prompt box 1505. In response to the operation, as shown in FIG. 16(b), the mobile phone may add an icon 1507 of the smart band 402 to the display area 1404.

After the smart band 402 is added to the home local area network, the user may enable a WLAN awareness service (also referred to as an NAN awareness service) of the home device and a WLAN awareness service of the smart band 402 by using the smart home application. The home device may publish (publish) one or more discoverable services, and the smart band 402 may subscribe to the one or more services published by the home device. The home device may also be referred to as a service publisher, and the smart band 402 is a service subscriber. After enabling the WLAN service, the home device may continuously transmit a target frame (publish frame) on a target channel (WIFI fixed channel, for example, channel 6), where the publish frame carries service information published by the home device. After enabling the WLAN awareness service, the smart band 402 may continuously scan a WIFI fixed channel (for example, channel 6). If a publish frame is scanned and it is determined that service information included in the publish frame is a service subscribed by the smart band 402, a response message may be returned to the home device. Both parties may establish a WLAN connection (for example, establish a WIFI channel on the WIFI fixed channel), and may create a socket (socket) for data sending. After the home device receives the response message sent by the smart band 402, the home device may determine that the smart band 402 enters a WLAN coverage area (geo-fence) of the home device.

The smart band 402 may control a home device that establishes a WLAN connection to the smart band 402. When the smart band 402 enters an overlapping area of WIFI coverage of two or more home devices, the smart band 402 may establish a WLAN connection to the two or more home devices. In this case, the smart band 402 may determine distances from the two or more home devices, and use a home device with the shortest distance as a to-be-controlled device.

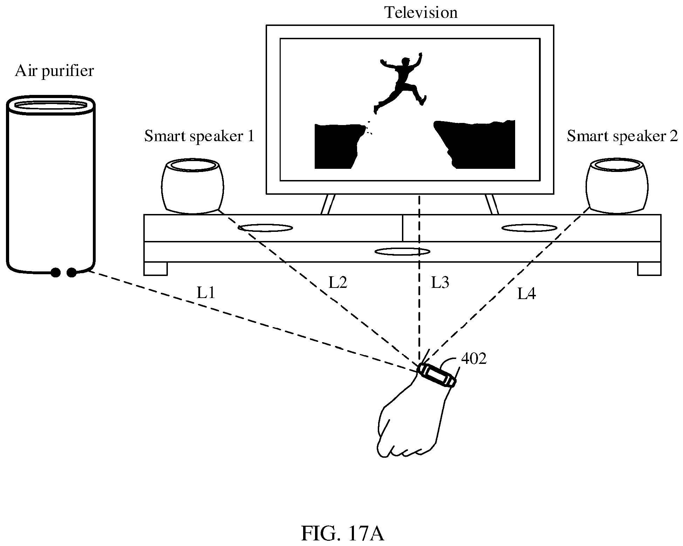

For example, as shown in FIG. 17A, the smart band 402 enters an overlapping area of a WIFI coverage area of a television, a smart speaker 1, a smart speaker 2, and an air purifier, and separately establishes a WLAN connection to the television, the smart speaker 1, the smart speaker 2, and the air purifier. The smart band 402 determines that distances from the air purifier, the smart speaker 1, the television, and the smart speaker 2 are L1, L2, L3, and L4, and L1>L2=L4>L3. Therefore, the smart band 402 uses the television as the to-be-controlled device, and controls the television to perform operations such as power-on, power-off, backward channel switching, forward channel switching, volume reduction, and volume increase.

In an optional implementation, an NFC chip and/or an infrared sensor are disposed on the smart band 402 and the home device, and the smart band 402 may determine a distance from the home device by using the NFC chip and/or the infrared sensor.

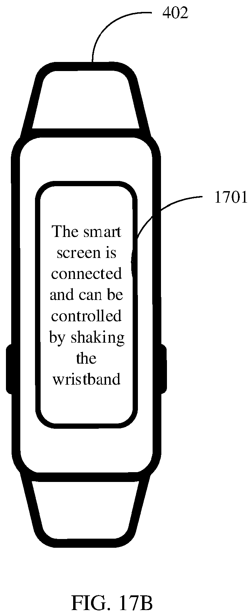

In an optional implementation, after using the television as the to-be-controlled device, the smart band 402 may display an interface 1701 shown in FIG. 17B. The interface 1701 is used to prompt a user that the television can be controlled by using the smart band 402.

Specifically, the user may perform a preset action in a case in which the smart band 402 is worn. After generating motion data that matches a motion track of the smart band 402, the smart band 402 queries from the preset motion track-instruction matching list to find a control instruction that matches the motion track (motion data), and send the control instruction to the television. In response to the control instruction, the television performs an operation corresponding to the control instruction, such as power-on, power-off, backward channel switching, forward channel switching, volume reduction, and volume increase.

For example, the motion track-instruction matching list may be shown in Table 2.

**Table 2**

| Motion track | Control instruction |
|---|---|
| Draw M | Backward channel switching |
| Draw W | Forward channel switching |
| Draw Z | Power-off |
| Draw V | Power-on |
| Clockwise rotation | Volume reduction |
| Counterclockwise rotation | Volume increase |
| ... | ... |

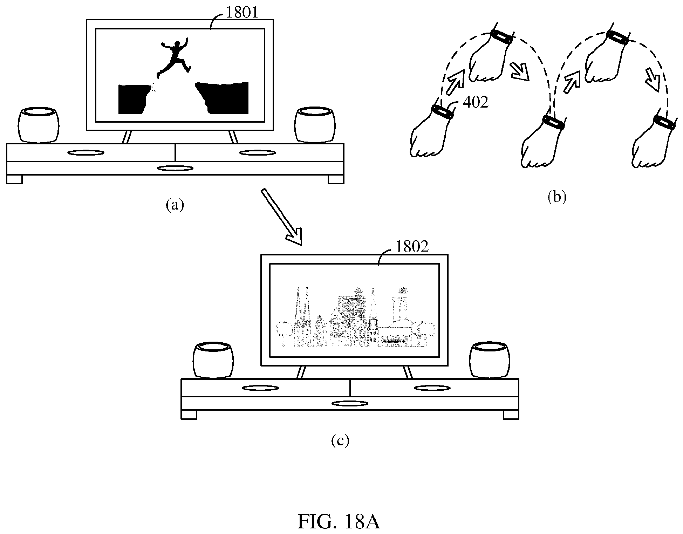

As shown in (a) in FIG. 18A, the television may display channel 1801. If the user wants to watch a next channel, as shown in (b) in FIG. 18A, the user may drive the smart band 402 to draw an "M". The smart band 402 queries from the preset motion track-instruction matching list to find that a control instruction corresponding to the motion track is a backward channel switching instruction, and send the backward channel switching instruction to the television. The television may receive the backward channel switching instruction. In response to the instruction, as shown in (c) in FIG. 18A, the television switches to channel 1802, and channel 1802 is a next channel of channel 1801.

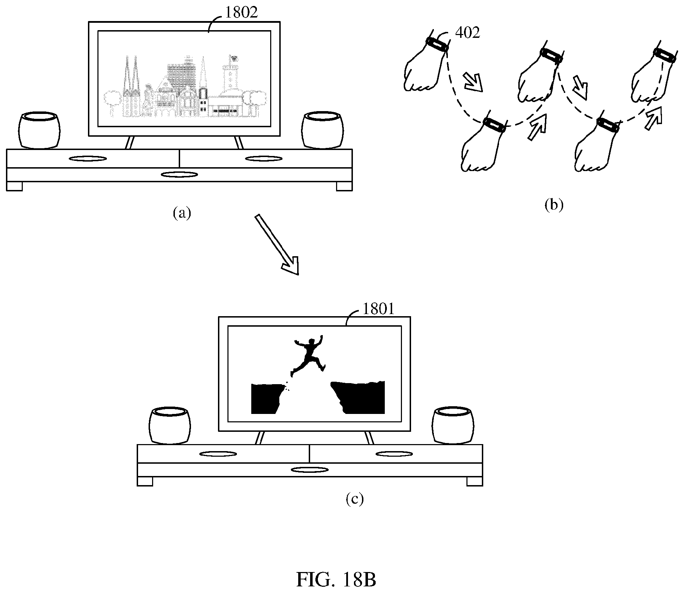

As shown in (a) in FIG. 18B, the television may display channel 1802. If the user wants to watch a previous channel, as shown in (b) in FIG. 18B, the user may drive the smart band 402 to draw a "W". The smart band 402 queries from the preset motion track-instruction matching list to find that a control instruction corresponding to the motion track is a forward channel switching instruction, and send the forward channel switching instruction to the television. The television may receive the forward channel switching instruction. In response to the instruction, as shown in (c) in FIG. 18B, the television switches to channel 1801, where channel 1801 is a previous channel of channel 1802.

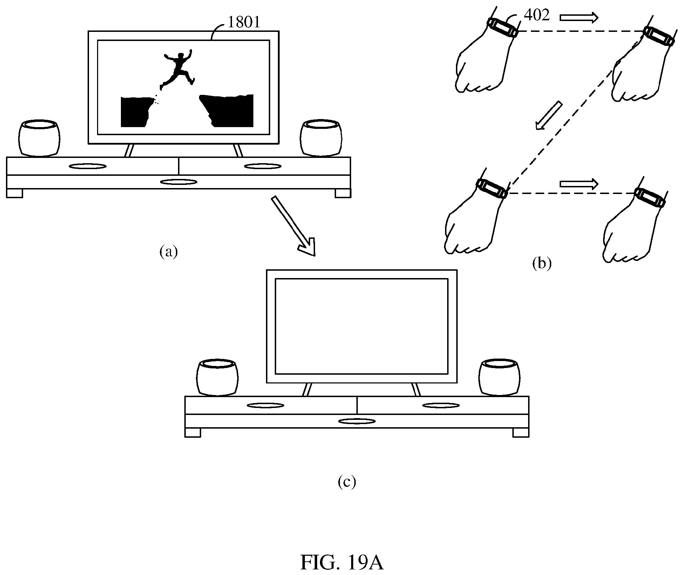

As shown in (a) in FIG. 19A, the television may display channel 1801. If the user does not want to watch television, the television needs to be powered off. As shown in (b) in FIG. 19A, the user can drive the smart band 402 to draw a "Z". The smart band 402 queries from the preset motion track-instruction matching list to find that a control instruction corresponding to the motion track is a power-off instruction, and send the power-off instruction to the television. The television may receive the power-off instruction. In response to the instruction, as shown in (c) in FIG. 19A, the television is powered off.

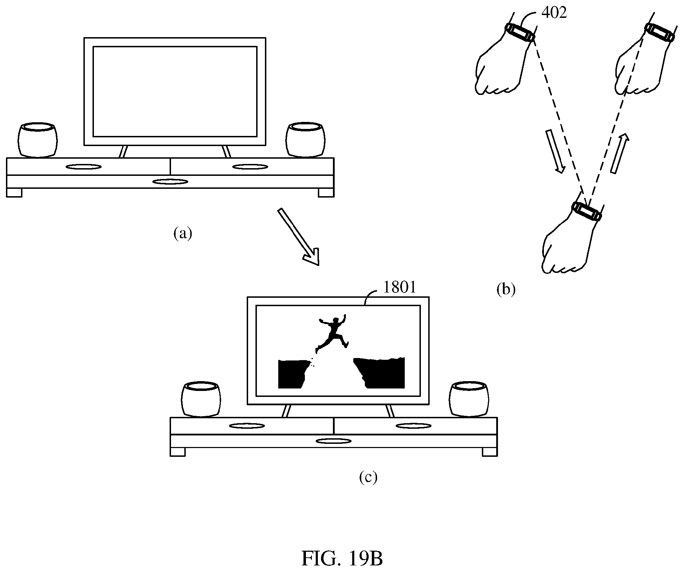

As shown in (a) in FIG. 19B, the television may be in a power-off state. If the user wants to watch television, as shown in (b) in FIG. 19B, the user may drive the smart band 402 to draw a "V". The smart band 402 queries from the preset motion track-instruction matching list to find that a control instruction corresponding to the motion track is a power-on instruction, and send the power-on instruction to the television. The television may receive the power-on instruction. In response to the instruction, as shown in (c) in FIG. 19B, the television is powered on.

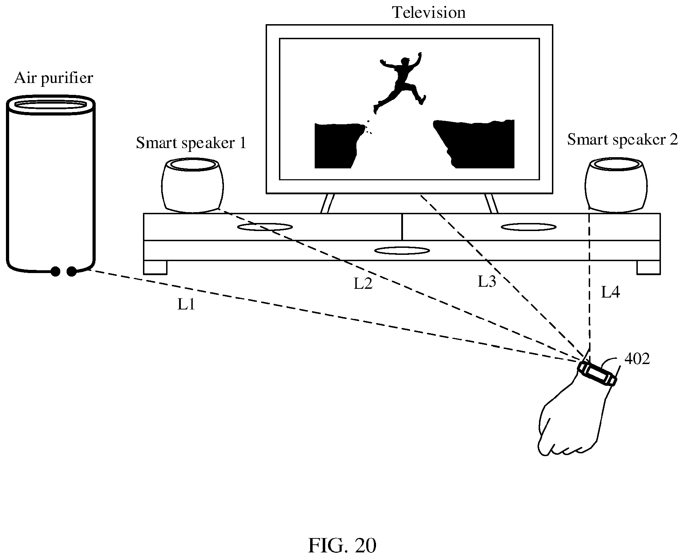

For example, as shown in FIG. 20, the smart band 402 enters an overlapping area of a WIFI coverage area of the television, the smart speaker 1, the smart speaker 2, and the air purifier, and separately establishes a WLAN connection to the television, the smart speaker 1, the smart speaker 2, and the air purifier. The smart band 402 determines that distances from the air purifier, the smart speaker 1, the television, and the smart speaker 2 are L1, L2, L4, and L3, and L1>L2>L4>L3. Therefore, the smart band 402 uses the smart speaker 2 as a to-be-controlled device, and controls the smart speaker 2 to perform operations such as power-on, power-off, volume reduction, and volume increase.

Specifically, the user may perform a preset action in a case in which the smart band 402 is worn. After generating motion data that matches a motion track of the smart band 402, the smart band 402 queries from the preset motion track-instruction matching list to find a control instruction that matches the motion track (motion data), and send the control instruction to the smart speaker 2. In response to the control instruction, the smart speaker 2 performs operations corresponding to the control instruction, such as power-on, power-off, volume reduction, and volume increase.

In an optional implementation, after the smart band 402 uses the smart speaker 2 as a to-be-controlled device, the smart band 402 may prompt the user that the smart speaker 2 may be controlled by using the smart band 402. A prompt manner may be similar to that shown in FIG. 17B, and details are not described herein again.

For example, the motion track-instruction matching list may be shown in Table 3.

**Table 3**

| Motion track | Control instruction |
|---|---|
| Draw Z | Power-off |
| Draw V | Power-on |
| Clockwise rotation | Volume reduction |
| Counterclockwise rotation | Volume increase |
| ... | ... |

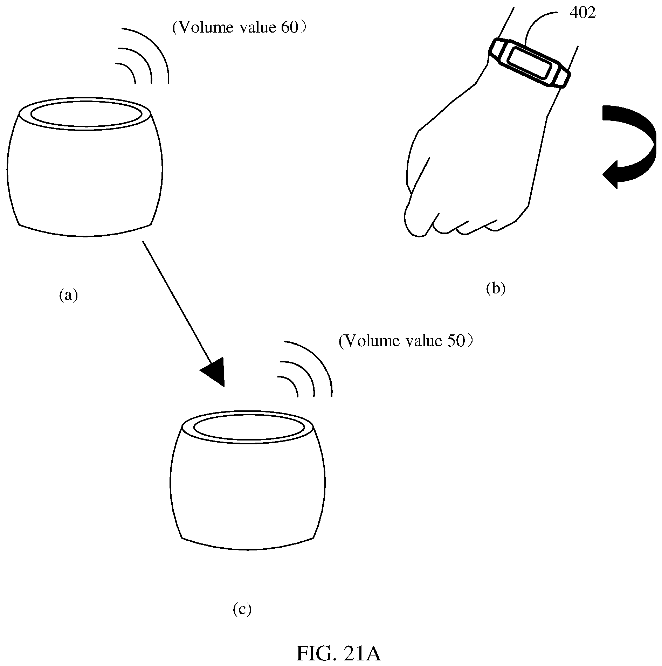

As shown in (a) in FIG. 21A, the smart speaker 2 may play audio at a volume value of 60. If the user needs to reduce the volume, as shown in (b) in FIG. 21A, the user may drive the smart band 402 to rotate clockwise. The smart band 402 queries from the preset motion track-instruction matching list to find that a control instruction corresponding to the motion track is a volume reduction instruction, and send the volume reduction instruction to the smart speaker 2. The smart speaker 2 may receive the volume reduction instruction. In response to the instruction, as shown in (c) in FIG. 21A, the smart speaker 2 adjusts the volume value to 50.

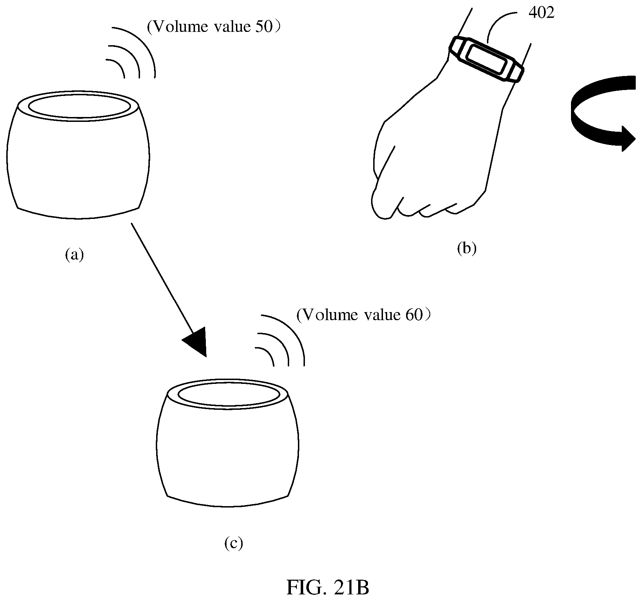

As shown in (a) in FIG. 21B, the smart speaker 2 may play audio at a volume value of 50. If the user needs to increase the volume, as shown in (b) in FIG. 21B, the user may drive the smart band 402 to rotate counterclockwise. The smart band 402 queries from the preset motion track-instruction matching list to find that a control instruction corresponding to the motion track is a volume increase instruction, and send the volume increase instruction to the smart speaker 2. The smart speaker 2 may receive the volume increase instruction. In response to the instruction, as shown in (c) in FIG. 21B, the smart speaker 2 adjusts the volume value to 60.

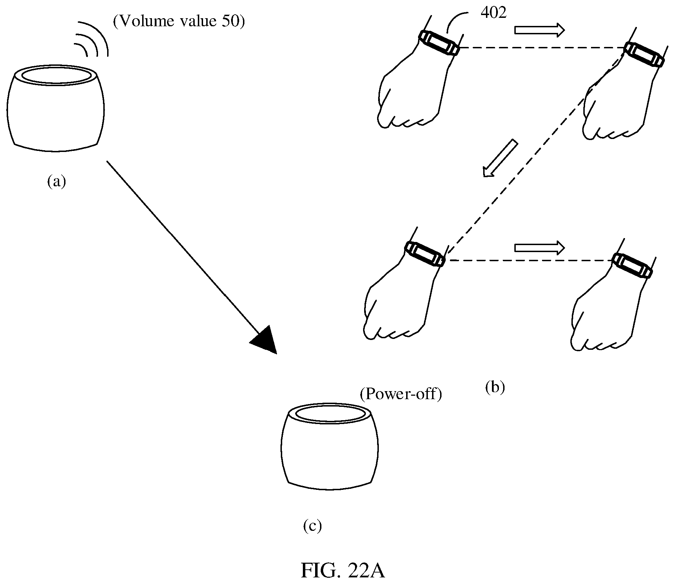

As shown in (a) in FIG. 22A, the smart speaker 2 may play audio at a volume value of 50. If the user does not want to listen to music, as shown in (b) in FIG. 22A, the user may drive the smart band 402 to draw a "Z". The smart band 402 queries from the preset motion track-instruction matching list to find that a control instruction corresponding to the motion track is a power-off instruction, and send the power-off instruction to the smart speaker 2. The smart speaker 2 may receive the power-off instruction. In response to the instruction, as shown in (c) in FIG. 22A, the smart speaker 2 is powered off.

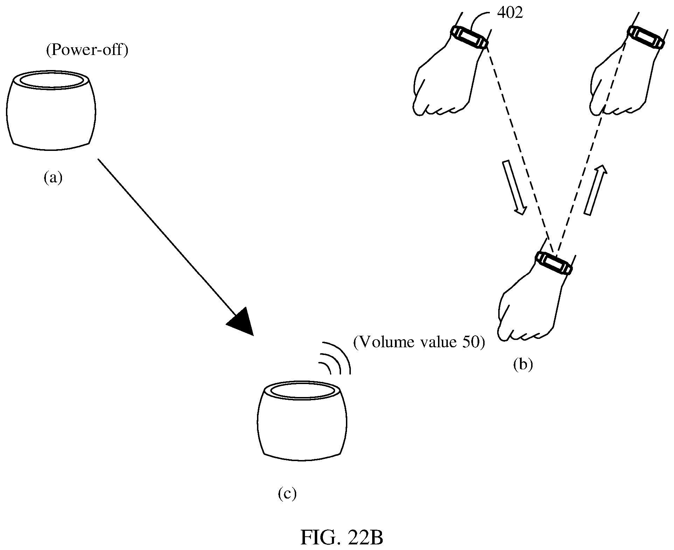

As shown in (a) in FIG. 22B, the smart speaker 2 may be in a power-off state. If the user wants to listen to music, as shown in (b) in FIG. 22B, the user may drive the smart band 402 to draw a "V". The smart band 402 queries from the preset motion track-instruction matching list to find that a control instruction corresponding to the motion track is a power-on instruction, and send the power-on instruction to the smart speaker 2. The smart speaker 2 may receive the power-on instruction. In response to the instruction, as shown in (c) in FIG. 22B, the smart speaker 2 is powered on, and plays audio at a volume value of 50.

It should be noted that in this scenario, in a process of controlling the home device, the wearer of the smart band 402 may be authenticated, that is, the home device may be controlled only when it is determined that the wearer of the smart band 402 has not changed. Alternatively, the wearer of the smart band 402 may not be authenticated, that is, anyone may control the home device by using the smart band 402, which is not specifically limited herein.

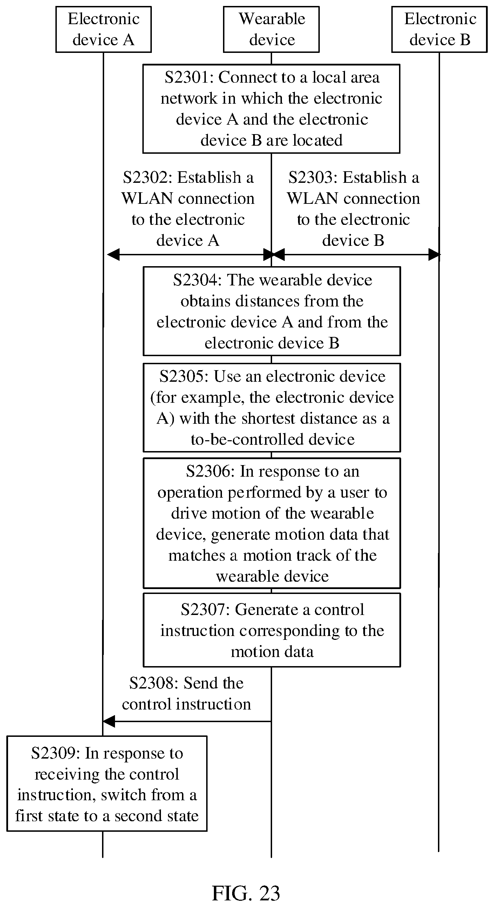

FIG. 23 is a flowchart of a method for controlling an electronic device by a wearable device according to an embodiment of this application. As shown in FIG. 23, the method includes:
S2301: A wearable device is connected to a local area network in which an electronic device A and an electronic device B are located.
   For example, the wearable device may be connected to the local area network in which the electronic device A and the electronic device B are located by using procedures shown in FIG. 14(a) to FIG. 14(c), FIG. 15(a) to FIG. 15(c), and FIG. 16(a) and FIG. 16(b).
S2302: The wearable device establishes a WLAN connection to the electronic device A.

It may be understood that a WLAN awareness service of the electronic device A is in an enabled state, and a WLAN awareness service of the wearable device is in an enabled state.

When the wearable device scans a publish frame transmitted by the electronic device A, and determines that service information included in the publish frame is a service subscribed by the wearable device, the wearable device may return a response message to the electronic device A. In response to receiving the response message, the electronic device A establishes a WLAN connection to the wearable device.

S2303: The wearable device establishes a WLAN connection to the electronic device B.

When the wearable device scans a publish frame transmitted by the electronic device B, and determines that service information included in the publish frame is a service subscribed by the wearable device, the wearable device may return a response message to the electronic device B. In response to receiving the response message, the electronic device B establishes a WLAN connection to the wearable device.

S2304: The wearable device obtains a distance from the electronic device A and a distance from the electronic device B.

In an optional implementation, the wearable device may obtain the distance from the electronic device A and the distance from the electronic device B by using an infrared technology or an NFC technology.

S2305: The wearable device uses an electronic device (for example, the electronic device A) with the shortest distance as a to-be-controlled device.

For example, if the distance between the wearable device and the electronic device A is less than the distance between the wearable device and the electronic device B, the electronic device A is used as a to-be-controlled device.

S2306: In response to an operation performed by a user to drive motion of the wearable device, the wearable device generates motion data that matches a motion track of the wearable device. In an optional implementation, the wearable device may identify an action of the user by using a motion sensor of the wearable device, and generate motion data that matches a motion track of the wearable device.

S2307: The wearable device generates a control instruction corresponding to the motion data.

In an optional implementation, the wearable device may find an operation identifier from a preset motion track-instruction matching list, and generate a control instruction corresponding to the operation identifier.

S2308: The wearable device sends a control instruction to the electronic device A.

S2309: In response to receiving the control instruction, the electronic device A switches from a first state to a second state.

The second state is a state in which the electronic device is in after an operation corresponding to the control instruction is performed, and the operation corresponding to the control instruction includes any one of power-on, power-off, volume increase, volume reduction, forward channel switching, backward channel switching, increasing temperature, and decreasing temperature. For example, the electronic device A may be a smart speaker, where the first state may be a state in which the volume value is 60 shown in (a) in FIG. 21A, and the second state may be a state in which the volume value is 50 shown in (c) in FIG. 21A.

It can be learned that according to the method for controlling an electronic device by a wearable device provided in this embodiment of this application, the user may perform a preset action in a case in which the wearable device is worn. The wearable device may identify a motion track of the wearable device and generate motion data that matches the motion track, so as to generate and send a control instruction based on the motion data and control the electronic device. Therefore, the user may perform different actions in a case in which the wearable device is worn, so as to implement control over different functions of the electronic device. This is simple and convenient, and user experience can be improved.

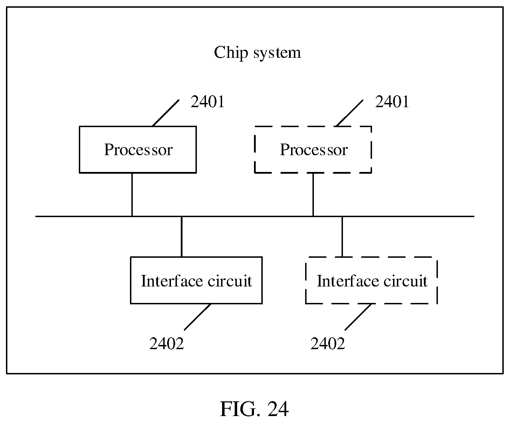

Another embodiment of this application provides a chip system. As shown in FIG. 24, the chip system includes at least one processor 2401 and at least one interface circuit 2402. The processor 2401 and the interface circuit 2402 may be interconnected through a line. For example, the interface circuit 2402 may be configured to receive a signal from another apparatus (for example, a memory of a wearable device or a memory of a terminal device). For another example, the interface circuit 2402 may be configured to send a signal to another apparatus (for example, the processor 2401).

For example, the interface circuit 2402 may read an instruction stored in a memory of a device, and send the instruction to the processor 2401. When the instruction is executed by the processor 2401, the wearable device or the terminal device may be enabled to perform steps in the foregoing embodiment.

According to the foregoing description of the implementations, a person skilled in the art may clearly understand that, for convenience and brevity of the description, only division of the foregoing functional modules is used as an example for description. In actual application, the foregoing functions may be allocated to different functional modules according to a requirement, that is, an internal structure of the apparatus is divided into different functional modules, so as to complete all or a part of the foregoing functions. For a specific working process of the foregoing system, apparatus, and unit, refer to a corresponding process in the foregoing method embodiment. Details are not described herein again.

Functional units in the embodiments of this application may be integrated into one processing unit, or each unit may exist separately physically, or two or more units may be integrated into one unit. The foregoing integrated unit may be implemented in a form of hardware, or may be implemented in a form of a software functional unit.

If the integrated unit is implemented in the form of a software functional unit and sold or used as an independent product, the integrated unit may be stored in a computer-readable storage medium.

Based on such an understanding, the technical solutions of the embodiments of this application essentially, or the part contributing to the prior art, or all or a part of the technical solutions may be implemented in a form of a software product. The computer software product is stored in a storage medium and includes several instructions for instructing a computer device (which may be a personal computer, a server, or a network device) or a processor to perform all or a part of the steps of the methods described in the embodiments of this application. The foregoing storage medium includes any medium that can store program code, such as a flash memory, a removable hard disk, a read-only memory, a random access memory, a magnetic disk, or an optical disc. The foregoing descriptions are merely specific implementations of the embodiments of this application. However, the protection scope of the embodiments of this application is not limited thereto. The invention is defined by the independent claims.

## Claims

1. A method for controlling an electronic device by a wearable device, applied to a communication system comprising a wearable device and an electronic device, wherein the wearable device maintains a worn state, and the method comprises:
establishing (S1202), by the wearable device, a binding relationship with the electronic device, wherein the binding relationship is used to indicate that the wearable device and the electronic device are bound by using a preset account name and a preset password;
in response to an operation performed by a user to drive motion of the wearable device, generating (S1205), by the wearable device, motion data that matches a motion track of the wearable device;
querying (1206), by the wearable device, from a preset motion track-instruction matching list to find a control instruction corresponding to the motion data, wherein the control instruction in the motion track-instruction matching list is an instruction of a page backward, a page forward, a minimization, a maximization, a backward channel switching, a forward channel switching, a power-off, a power-on, a volume reduction, or a volume increase; and sending (S1207) the control instruction to the electronic device; and
in response to receiving the control instruction, switching (S1208), by the electronic device, from a first interface to a second interface, wherein the second interface is an interface displayed after the electronic device performs an operation corresponding to the control instruction on a first operation target, and the first operation target comprises any one of a presentation document, a video file, an audio file, and a document, wherein the method further comprises:
in response to determining (S1203) that a wearing status of the wearable device changes from the worn state to a detached state, re-establishing (S1204), by the wearable device, a binding relationship with the electronic device, wherein the establishing (S1202), by the wearable device, a binding relationship with the electronic device comprises:
displaying, by the electronic device, a first prompt box, wherein the first prompt box is used to prompt the user to establish a binding relationship between the wearable device and the electronic device, and the first prompt box comprises a first option;
in response to an operation performed by the user on the first option, displaying, by the electronic device, a second prompt box, wherein the second prompt box is used to remind the user to wear the wearable device, and the second prompt box comprises a second option;
in response to wearing the wearable device by the user, sending, by the wearable device, wearing status information to the electronic device, wherein the wearing status information is used to indicate that the wearable device is in a worn state;
in response to an operation performed by the user on the second option and receiving the wearing status information, displaying, by the electronic device, a password input prompt box, wherein the password input prompt box comprises the preset account name; and
in response to an operation of the user entering the preset password in the password input prompt box, establishing, by the electronic device, a binding relationship with the wearable device.

2. A communication system, comprising a wearable device (200) and an electronic device (300), wherein the wearable device (300) maintains a worn state, wherein
the wearable device (300) is configured to establish a binding relationship with the electronic device (200), wherein the binding relationship is used to indicate that the wearable device (300) and the electronic device (300) are bound by using a preset account name and a preset password;
in response to an operation performed by a user to drive motion of the wearable device (300), the wearable device (300) is configured to generate motion data that matches a motion track of the wearable device (300);
the wearable device (300) is configured to query from a preset motion track-instruction matching list to find a control instruction corresponding to the motion data, wherein the control instruction in the motion track-instruction matching list is an instruction of a page backward, a page forward, a minimization, a maximization, a backward channel switching, a forward channel switching, a power-off, a power-on, a volume reduction, or a volume increase; and send the control instruction to the electronic device (200); and
in response to receiving the control instruction, the electronic device (200) is configured to switch from a first interface to a second interface, wherein the second interface is an interface displayed after the electronic device (200) performs an operation corresponding to the control instruction on a first operation target, and the first operation target comprises any one of a presentation document, a video file, an audio file, and a document, wherein:
in response to determining that a wearing status of the wearable device (300) changes from the worn state to a detached state, the wearable device (300) is configured to re-establish a binding relationship with the electronic device (200),
wherein the electronic device (200) is configured to display a first prompt box, wherein the first prompt box is used to prompt the user to establish a binding relationship between the wearable device (300) and the electronic device (200), and the first prompt box comprises a first option;
in response to an operation performed by the user on the first option, the electronic device (200) is configured to display a second prompt box, wherein the second prompt box is used to remind the user to wear the wearable device (300), and the second prompt box comprises a second option;
in response to wearing the wearable device (300) by the user, the wearable device (300) is configured to send wearing status information to the electronic device (200), wherein the wearing status information is used to indicate that the wearable device (300) is in a worn state;
in response to an operation performed by the user on the second option and receiving the wearing status information, the electronic device (200) is configured to display a password input prompt box, wherein the password input prompt box comprises the preset account name; and
in response to an operation of the user entering the preset password in the password input prompt box, the electronic device (200) is configured to establish a binding relationship with the wearable device (300).

## Patentansprüche

1. Verfahren zur Steuerung eines elektronischen Geräts durch ein tragbares Gerät, angewandt in einem Kommunikationssystem, das ein tragbares Gerät und ein elektronisches Gerät umfasst, wobei sich das tragbare Gerät im getragenen Zustand befindet, und das Verfahren umfasst:
Herstellen (S1202) einer Bindungsbeziehung mit dem elektronischen Gerät durch das tragbare Gerät, wobei die Bindungsbeziehung dazu dient anzuzeigen, dass das tragbare Gerät und das elektronische Gerät mittels eines voreingestellten Kontonamens und eines voreingestellten Passworts gebunden sind;
als Reaktion auf eine durch den Benutzer ausgeführte Bedienung zum Bewegen des tragbaren Geräts generiert das tragbare Gerät Bewegungsdaten (S1205), die einer Bewegungsbahn des tragbaren Geräts entsprechen;
Abfragen (S1206) durch das tragbare Gerät aus einer voreingestellten Bewegungsbahn-Befehl-Zuordnungsliste, um eine Steueranweisung zu finden, die den Bewegungsdaten entspricht, wobei die Steueranweisungen in der Bewegungsbahn-Befehl-Zuordnungsliste Anweisungen für Seitenrücklauf, Seitenvorlauf, Minimierung, Maximierung, rückwärtiges Umschalten des Kanals, vorwärtiges Umschalten des Kanals, Ausschalten, Einschalten, Lautstärkereduzierung oder Lautstärkeerhöhung sind; und Senden (S1207) der Steueranweisung an das elektronische Gerät; und
als Reaktion auf den Empfang der Steueranweisung durch das elektronische Gerät, Umschalten (S1208) von einer ersten Benutzeroberfläche auf eine zweite Benutzeroberfläche, wobei die zweite Benutzeroberfläche nach der Ausführung der zur Steueranweisung gehörigen Operation des elektronischen Geräts an einem ersten Bedienziel angezeigt wird, und das erste Bedienziel eines der folgenden umfasst: ein Präsentationsdokument, eine Videodatei, eine Audiodatei oder ein Dokument; wobei das Verfahren ferner umfasst:
als Reaktion auf die Feststellung (S1203), dass sich der Tragezustand des tragbaren Geräts vom getragenen Zustand in einen abgelegten Zustand ändert, wird das Herstellen (S1204) einer Bindungsbeziehung mit dem elektronischen Gerät durch das tragbare Gerät erneut durchgeführt, wobei das Herstellen (S1202) der Bindungsbeziehung durch das tragbare Gerät Folgendes umfasst:
Anzeigen eines ersten Hinweisfensters durch das elektronische Gerät, wobei das erste Hinweisfenster dazu dient, den Benutzer zur Herstellung einer Bindungsbeziehung zwischen dem tragbaren Gerät und dem elektronischen Gerät aufzufordern, und das erste Hinweisfenster eine erste Option umfasst;
als Reaktion auf eine vom Benutzer an der ersten Option ausgeführte Bedienung zeigt das elektronische Gerät ein zweites Hinweisfenster an, wobei das zweite Hinweisfenster dazu dient, den Benutzer an das Anlegen des tragbaren Geräts zu erinnern, und das zweite Hinweisfenster eine zweite Option umfasst;
Als Reaktion auf das Tragen des tragbaren Geräts durch den Benutzer sendet das tragbare Gerät Tragezustandsinformationen an das elektronische Gerät, wobei die Tragezustandsinformationen anzeigen, dass sich das tragbare Gerät im getragenen Zustand befindet;
Als Reaktion auf eine vom Benutzer an der zweiten Option durchgeführte Aktion und dem Empfang der Tragezustandsinformationen zeigt das elektronische Gerät ein Passwort-Eingabeaufforderungsfenster an, wobei das Passwort-Eingabeaufforderungsfenster den voreingestellten Kontonamen enthält;
Als Reaktion auf die Eingabe des voreingestellten Passworts durch den Benutzer in das Passwort-Eingabeaufforderungsfenster stellt das elektronische Gerät eine Bindungsbeziehung mit dem tragbaren Gerät her.

2. Ein Kommunikationssystem, das ein tragbares Gerät (200) und ein elektronisches Gerät (300) umfasst, wobei das tragbare Gerät (300) einen getragenen Zustand aufrechterhält, wobei
Das tragbare Gerät (300) ist dazu konfiguriert, eine Bindungsbeziehung mit dem elektronischen Gerät (200) herzustellen, wobei die Bindungsbeziehung dazu dient, anzuzeigen, dass das tragbare Gerät (300) und das elektronische Gerät (300) mit einem voreingestellten Kontonamen und einem voreingestellten Passwort gebunden sind;
Als Reaktion auf eine vom Benutzer ausgeführte Aktion, die eine Bewegung des tragbaren Geräts (300) auslöst, ist das tragbare Gerät (300) dazu konfiguriert, Bewegungsdaten zu erzeugen, die der Bewegungsbahn des tragbaren Geräts (300) entsprechen;
Das tragbare Gerät (300) ist dazu konfiguriert, aus einer voreingestellten Liste zur Zuordnung von Bewegungsbahnen und Steuerbefehlen eine Steueranweisung zu finden, die den Bewegungsdaten entspricht, wobei die Steueranweisung in der Liste eine Anweisung zum Rückwärtsblättern, Vorwärtsblättern, Minimieren, Maximieren, Rückwärtskanalwechsel, Vorwärtskanalwechsel, Ausschalten, Einschalten, Lautstärkeverringerung oder Lautstärkeerhöhung ist; und sendet die Steueranweisung an das elektronische Gerät (200); und
Als Reaktion auf den Erhalt der Steueranweisung ist das elektronische Gerät (200) dazu konfiguriert, von einer ersten auf eine zweite Schnittstelle zu wechseln, wobei die zweite Schnittstelle eine Schnittstelle ist, die angezeigt wird, nachdem das elektronische Gerät (200) eine zum Steuerbefehl gehörende Aktion an einem ersten Bedienziel ausgeführt hat, wobei das erste Bedienziel eines der folgenden umfasst: eine Präsentationsdatei, eine Videodatei, eine Audiodatei oder ein Dokument, wobei:
Als Reaktion auf die Feststellung, dass sich der Tragezustand des tragbaren Geräts (300) vom getragenen Zustand in den abgenommenen Zustand ändert, ist das tragbare Gerät (300) dazu konfiguriert, die Bindungsbeziehung mit dem elektronischen Gerät (200) erneut herzustellen,
wobei das elektronische Gerät (200) so konfiguriert ist, dass es ein erstes Eingabeaufforderungsfeld anzeigt, wobei das erste Eingabeaufforderungsfeld dazu dient, den Benutzer aufzufordern, eine Bindungsbeziehung zwischen dem tragbaren Gerät (300) und dem elektronischen Gerät (200) herzustellen, und das erste Eingabeaufforderungsfeld eine erste Option umfasst;
als Reaktion auf eine vom Benutzer an der ersten Option ausgeführte Aktion ist das elektronische Gerät (200) so konfiguriert, dass es ein zweites Eingabeaufforderungsfeld anzeigt, wobei das zweite Eingabeaufforderungsfeld dazu dient, den Benutzer daran zu erinnern, das tragbare Gerät (300) zu tragen, und das zweite Eingabeaufforderungsfeld eine zweite Option umfasst;
als Reaktion darauf, dass der Benutzer das tragbare Gerät (300) trägt, ist das tragbare Gerät (300) so konfiguriert, dass es Tragezustandsinformationen an das elektronische Gerät (200) sendet, wobei die Tragezustandsinformationen dazu dienen anzuzeigen, dass sich das tragbare Gerät (300) im getragenen Zustand befindet;
als Reaktion auf eine vom Benutzer an der zweiten Option ausgeführte Aktion und das Empfangen der Tragezustandsinformation ist das elektronische Gerät (200) so konfiguriert, dass es ein Passworteingabe-Eingabeaufforderungsfeld anzeigt, wobei das Passworteingabe-Eingabeaufforderungsfeld den voreingestellten Kontonamen umfasst; und
als Reaktion auf die Eingabe des voreingestellten Passworts durch den Benutzer im Passworteingabe-Eingabeaufforderungsfeld ist das elektronische Gerät (200) so konfiguriert, dass es eine Bindungsbeziehung zum tragbaren Gerät (300) herstellt.

## Revendications

1. Procédé de contrôle d'un dispositif électronique par un dispositif portable, appliqué à un système de communication comprenant un dispositif portable et un dispositif électronique, le dispositif portable étant maintenu dans un état porté, le procédé comprenant :
établir (S1202), par le dispositif portable, une relation d'appairage avec le dispositif électronique, la relation d'appairage étant utilisée pour indiquer que le dispositif portable et le dispositif électronique sont appairés à l'aide d'un nom de compte prédéfini et d'un mot de passe prédéfini ;
en réponse à une opération effectuée par un utilisateur pour entraîner le mouvement du dispositif portable, générer (S1205), par le dispositif portable, des données de mouvement correspondant à la trajectoire de mouvement du dispositif portable ;
interroger (1206), par le dispositif portable, dans une liste de correspondance prédéfinie entre trajectoire de mouvement et instruction, afin de trouver une instruction de contrôle correspondant aux données de mouvement, l'instruction de contrôle dans la liste de correspondance étant une instruction de page précédente, page suivante, minimisation, maximisation, commutation de chaîne arrière, commutation de chaîne avant, extinction, mise sous tension, réduction du volume ou augmentation du volume ; et envoyer (S1207) l'instruction de contrôle au dispositif électronique ; et
en réponse à la réception de l'instruction de contrôle, commuter (S1208), par le dispositif électronique, d'une première interface vers une seconde interface, la seconde interface étant celle affichée après que le dispositif électronique effectue une opération correspondant à l'instruction de contrôle sur une première cible d'opération, la première cible d'opération comprenant l'un quelconque d'un document de présentation, d'un fichier vidéo, d'un fichier audio ou d'un document, le procédé comprenant en outre :
en réponse à la détermination (S1203) qu'un état de port du dispositif portable passe de l'état porté à un état détaché, ré-établir (S1204), par le dispositif portable, une relation d'appairage avec le dispositif électronique, où l'établissement (S1202), par le dispositif portable, d'une relation d'appairage avec le dispositif électronique comprend :
affichage, par le dispositif électronique, d'une première boîte de dialogue, la première boîte de dialogue servant à inviter l'utilisateur à établir une relation d'appairage entre le dispositif portable et le dispositif électronique, et la première boîte de dialogue comprenant une première option ;
en réponse à une opération effectuée par l'utilisateur sur la première option, affichage, par le dispositif électronique, d'une seconde boîte de dialogue, la seconde boîte de dialogue servant à rappeler à l'utilisateur de porter le dispositif portable, et la seconde boîte de dialogue comprenant une seconde option ;
en réponse au port du dispositif portable par l'utilisateur, le dispositif portable envoie des informations d'état de port à l'appareil électronique, les informations d'état de port étant utilisées pour indiquer que le dispositif portable est en état porté ;
en réponse à une opération effectuée par l'utilisateur sur la deuxième option et à la réception des informations d'état de port, l'appareil électronique affiche une boîte de dialogue de saisie du mot de passe, la boîte de dialogue de saisie du mot de passe comprenant le nom de compte préconfiguré ; et
en réponse à l'action de l'utilisateur saisissant le mot de passe préconfiguré dans la boîte de dialogue de saisie du mot de passe, l'appareil électronique établit une relation d'appairage avec le dispositif portable.

2. Un système de communication comprenant un dispositif portable (200) et un appareil électronique (300), dans lequel le dispositif portable (300) maintient un état porté, dans lequel
le dispositif portable (300) est configuré pour établir une relation d'appairage avec l'appareil électronique (200), la relation d'appairage étant utilisée pour indiquer que le dispositif portable (300) et l'appareil électronique (300) sont appariés en utilisant un nom de compte et un mot de passe préconfigurés ;
en réponse à une opération effectuée par un utilisateur pour entraîner le mouvement du dispositif portable (300), le dispositif portable (300) est configuré pour générer des données de mouvement qui correspondent à la trajectoire du mouvement du dispositif portable (300) ;
le dispositif portable (300) est configuré pour interroger, dans une liste prédéfinie d'association trajectoire-instruction, afin de trouver une instruction de contrôle correspondant aux données de mouvement. L'instruction de contrôle dans la liste d'association trajectoire-instruction est une instruction de page précédente, page suivante, minimisation, maximisation, commutation arrière de canal, commutation avant de canal, extinction, allumage, réduction du volume ou augmentation du volume ; et pour envoyer l'instruction de contrôle à l'appareil électronique (200) ; et
en réponse à la réception de l'instruction de contrôle, l'appareil électronique (200) est configuré pour passer d'une première interface à une seconde interface, la seconde interface étant une interface affichée après que l'appareil électronique (200) a effectué une opération correspondant à l'instruction de contrôle sur une première cible d'opération, et la première cible d'opération comprenant n'importe lequel des éléments suivants : un document de présentation, un fichier vidéo, un fichier audio ou un document, dans lequel :
en réponse à la détermination que l'état de port du dispositif portable (300) passe de l'état porté à l'état détaché, le dispositif portable (300) est configuré pour rétablir une relation d'appairage avec l'appareil électronique (200),
dans lequel le dispositif électronique (200) est configuré pour afficher une première boîte de dialogue, la première boîte de dialogue étant utilisée pour inviter l'utilisateur à établir une relation d'association entre le dispositif portable (300) et le dispositif électronique (200), et la première boîte de dialogue comprend une première option ;
en réponse à une opération effectuée par l'utilisateur sur la première option, le dispositif électronique (200) est configuré pour afficher une deuxième boîte de dialogue, la deuxième boîte de dialogue étant utilisée pour rappeler à l'utilisateur de porter le dispositif portable (300), et la deuxième boîte de dialogue comprend une deuxième option ;
en réponse au port du dispositif portable (300) par l'utilisateur, le dispositif portable (300) est configuré pour envoyer des informations sur l'état de port au dispositif électronique (200), les informations sur l'état de port étant utilisées pour indiquer que le dispositif portable (300) est en état d'être porté ;
en réponse à une opération effectuée par l'utilisateur sur la deuxième option et à la réception des informations sur l'état de port, le dispositif électronique (200) est configuré pour afficher une boîte de dialogue de saisie de mot de passe, ladite boîte de dialogue comprenant le nom de compte prédéfini ; et
en réponse à une opération où l'utilisateur saisit le mot de passe prédéfini dans la boîte de dialogue de saisie de mot de passe, le dispositif électronique (200) est configuré pour établir une relation d'association avec le dispositif portable (300).
